# EUROPÄISCHE PATENTSCHRIFT

(11) **EP 3 351 384 B1**
(45) Veröffentlichungstag und Bekanntmachung des Hinweises auf die Patenterteilung: **25.01.2023**
(21) Anmeldenummer: 18158824.5
(22) Anmeldetag: 26.08.2015
(51) Int. Cl.: B22F 10/00, B22F 12/00, B29C 64/182, B33Y 10/00, B29C 64/20, B29C 64/165, B33Y 30/00, B22F 10/28, B22F 12/84, B29C 64/245, B29C 64/25

(54) **3D-DRUCKER, 3D-DRUCKERANORDNUNG UND GENERATIVES FERTIGUNGSVERFAHREN**
3D PRINTER, 3D PRINTER ASSEMBLY AND GENERATIVE PRODUCTION METHOD
IMPRIMANTE TRIDIMENSIONNELLE, SYSTÈME D'IMPRIMANTE TRIDIMENSIONNELLE ET PROCÉDÉ DE FABRICATION GÉNÉRATIVE

(30) Priorität: 29.08.2014 DE 102014112447
(43) Veröffentlichungstag der Anmeldung: 25.07.2018
(62) Teilanmeldung aus: 15766066.3
(73) Patentinhaber: ExOne GmbH, 86368 Gersthofen (DE)
(72) Erfinder: HÖCHSMANN, Rainer, 86863 Langenneufnach (DE); MÜLLER, Alexander, 86420 Diedorf-Vogelsang (DE); KLAUA, Sven, 86161 Augsburg (DE)
(74) Vertreter: Viering, Jentschura & Partner mbB Patent- und Rechtsanwälte

(56) Entgegenhaltungen:
- DE-A1- 19 952 998
- DE-A1-102009 036 153
- DE-A1-102009 056 689
- DE-A1-102010 020 416
- DE-U1-202004 007 213
- US-A1- 2014 065 194

## Beschreibung

Die vorliegende Erfindung betrifft einen 3D-Drucker, eine 3D-Druckeranordnung mit mindestens einem solchen 3D-Drucker sowie ein generatives Fertigungsverfahren.

Es sind verschiedene generative Fertigungsverfahren (und folglich verschiedene Arten von 3D-Druckern) bekannt.

Einige generative Fertigungsverfahren haben die folgenden Schritte gemeinsam:
(1) Es wird zunächst Partikelmaterial vollflächig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht vollflächig aufgetragen wird (alternativ können zum Beispiel der Beschichter und die Druckvorrichtung jeweils um eine Schichtdicke angehoben werden).
(4) Schließlich kann das gefertigte Bauteil, das von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Ein Beispiel für eine solche Baubox ist zum Beispiel in DE 10 2009 056 696 A1 beschrieben.

In dem obigen Schritt (1) kommt in der Regel eine Beschichteranordnung mit einem Beschichter (auch "Recoater" genannt) zum Einsatz. Es sind unterschiedliche Beschichteranordnungen zur Verwendung in einem 3-Drucker bekannt, mit denen ein partikelförmiges Baumaterial in einer gleichmäßigen, vollflächigen Schicht auf das Baufeld (auch Baufläche oder Baubereich genannt) aufgebracht werden kann.

Eine Art von Beschichteranordnung verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Beschichteranordnungen mit großen Längen sind mit einem Walzen-Beschichter schlecht/schwierig darzustellen.

Eine andere Art von Beschichteranordnung (sogenannte Beschichteranordnung mit "Behälter-Beschichter", zum Beispiel "Schlitz-Beschichter") verwendet einen Beschichter mit einem Behälter, der über ein Baufeld hinweg verfahrbar ist und einen inneren Hohlraum zur Aufnahme von partikelförmigem Baumaterial definiert, der in einer Öffnung zum Ausgeben des partikelförmigen Baumaterials auf das Baufeld mündet. Der Beschichter kann langgestreckt sein, um zum Beispiel die Länge oder Breite eines rechteckigen Baufelds zu überspannen bzw. abzudecken. Die Öffnung kann dann als Längsschlitz ausgebildet sein. Der Beschichter kann also horizontal über das Baufeld hinweg verfahren werden und dabei partikelförmiges Baumaterial aus der Öffnung heraus auf das Baufeld ausgeben, um dadurch eine gleichmäßige, vollflächige Schicht auf das Baufeld aufzubringen.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer Verfestigung der Baumaterial-Schicht in dem Teilbereich bei. Zum Beispiel kann das Behandlungsmittel ein Bindemittel sein, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Unter partikelförmigem Baumaterial kann im Sinne dieser Anmeldung ein Baumaterial verstanden werden, welches zumindest eine Art von Partikelmaterial (zum Beispiel Sand(körner), zum Beispiel Gießereisand, und/oder Metallpartikel und/oder Kunststoffpartikel) aufweist. Es können auch mehrere unterschiedliche Arten von Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann ferner zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten.

Aus dem oben genannten Dokument ist bereits ein 3D-Drucker mit zwei Bauboxen bekannt. Allerdings kann der 3D-Drucker stets nur eine der beiden Bauboxen aufnehmen und folglich immer nur einen Baujob (=generatives Fertigen von ein oder mehreren Bauteilen in einem zugeordneten Bauraum) ausführen. Die beiden Bauboxen können jedoch die Zeitspanne zwischen einem ersten Baujob und einem zweiten Baujob, während der die Anlage bzw. der Drucker stillliegt bzw. nicht druckt (zum Beispiel um die Baubox zu entnehmen, die darin enthaltenen Teil zu entpacken und die Baubox für den nächsten Baujob zu präparieren etc.), verkürzen.

DE 10 2009 036 153 A1 offenbart eine Vorrichtung zur generativen Herstellung dreidimensionaler Formteile aus pulverartigem Baumaterial unter Einbringung von Strahlungsenergie, mit einem Bauraum, der in zwei Bauraumabschnitte aufgeteilt ist, wobei die Bauraumabschnitte jeweils einen Wechselbehälter aufnehmen, wobei die Vorrichtung nach Art eines beidseitig offenen Portals ausgebildet ist, wobei die Wechselbehälter entweder von beiden offenen Portalseiten zuführbar und/oder entnehmbar sind oder durch das Portal hindurchführbar sind und wobei Wechselbehälter behälterartige Anordnungen sind, die eine absenkbare Bauplattform beinhalten, auf der schichtweise Pulver aufgelagert werden kann und die zusätzlich mit einer Pulverhandlingsanordnung versehen sind, d.h. einen Pulvervorratsbehälter, eine Beschichtereinrichtung und einen Pulverüberlaufbehälter aufweisen.

Es kann als eine Aufgabe der vorliegenden Erfindung angesehen werden, einen 3D-Drucker und ein generatives Fertigungsverfahren bereitzustellen, die eine Steigerung des Durchsatzes ermöglichen.

Die vorliegende Erfindung stellt einen 3D-Drucker nach Anspruch 1, eine 3D-Druckeranordnung nach Anspruch 13 mit mindestens einem solchen 3D-Drucker sowie ein generatives Fertigungsverfahren nach Anspruch 15 bereit. Weitere erfindungsgemäße Ausgestaltungen sind in den jeweiligen abhängigen Ansprüchen beschrieben.

Gemäß verschiedenen Ausführungsformen der Erfindung kann anschaulich die Kapazität und in der Folge auch der Durchsatz des 3D-Druckers erhöht werden, da die Fertigung nicht auf einen einzigen Bauraum beschränkt ist, sondern bei Bedarf mit dem 3D-Drucker in zwei (oder mehr) Bauräumen gleichzeitig gefertigt werden kann, also zwei (oder mehr) Baujobs gleichzeitig mit dem 3D-Drucker ausgeführt werden können. Gemäß verschiedenen Ausführungsformen der Erfindung ermöglicht die Unterteilung in einen ersten und einen zweiten Bauraum, anstatt des Vorsehens eines einzigen, vergleichsweise großen Bauraums, anschaulich, dass die Qualität der herzustellenden Bauteile zweckmäßig aufrechterhalten werden kann (also nicht unter der Steigerung der Kapazität bzw. des Durchsatzes leiden muss), zum Beispiel bei vertretbaren Kosten und/oder bei vertretbarer Komplexität. Hierbei ist zu berücksichtigen, dass die jeweilige Länge, die eine Beschichteranordnung oder Druckvorrichtung ohne eine Beeinträchtigung der Bauteil-Qualität (zum Beispiel in Folge einer Durchbiegung einer Beschichter-Komponente, wie zum Beispiel einer Beschichter-Klinge zum Überstreifen von ausgegebenem Baumaterial) durchgängig überspannen kann (insbesondere bei vertretbaren Kosten und/oder bei vertretbarer Komplexität), in der Praxis begrenzt ist. Anschaulich kann durch die Unterteilung in einen ersten und einen zweiten Bauraum zum Beispiel auch die Beschichteranordnung entsprechend segmentiert werden. Der Einsatz von mehreren Beschichtern für einen einzigen, großen Bauraum kann hingegen problematisch sein, da das Aufbringen einer gleichmäßigen Schicht (insbesondere zwischen den beiden Beschichtern) dann nicht mehr möglich oder zumindest stark erschwert ist.

Gemäß verschiedenen Ausführungsformen der Erfindung ermöglicht die Unterteilung in einen ersten und einen zweiten Bauraum, anstatt des Vorsehens eines einzigen, vergleichsweise großen Bauraums, zudem anschaulich, dass die Steigerung der Kapazität bzw. des Durchsatzes nicht auf Kosten der Handhabbarkeit erfolgt, denn zwei separate Bauräume (zum Beispiel gebildet von zwei separaten Bauboxen) sind wesentlich leichter zu handhaben als ein großer Bauraum. Zum Beispiel kann das Entpacken der Bauteile aus einem großen Bauraum insofern problematisch sein, dass ein Bediener der Anlage in der Mitte des Bauraums angeordnete Bauteile nicht ohne den Einsatz von Hilfsmitteln erreicht, wohingegen zwei separate Bauräume ein ergonomisches Entpacken aller Bauteile aus dem jeweiligen Bauraum ermöglichen können.

Gemäß verschiedenen Ausführungsformen der Erfindung können der in dem ersten Bauraum durchzuführende erste Baujob und der in dem zweiten Bauraum durchzuführende zweite Baujob infolge einer geschickten Anordnung von Beschichteranordnung und/oder Druckvorrichtung vergleichsweise schnell durchgeführt werden, zum Beispiel bei vertretbarem Aufwand und/oder vertretbaren Kosten.

Gegenüber einer Anordnung mit zwei (oder mehr) separaten 3D-Druckern, die einen jeweiligen Bauraum bereitstellen, in dem ein jeweiliger Baujob ausgeführt wird, kann mit dem erfindungsgemäßen 3D-Drucker mit zwei (oder mehr) Bauräumen der Durchsatz kostengünstig gesteigert werden, da zum Beispiel ein gemeinsames Gehäuse, eine gemeinsame Rahmenstruktur, eine gemeinsame Steuerung bzw. ein gemeinsamer Steuerschrank, ein gemeinsamer Druckkopf, eine gemeinsame Beschichter-Beschickungsvorrichtung etc. verwendet werden können (zum Beispiel eine oder mehrere oder alle der genannten gemeinsamen Komponenten), d.h. es kann eine Vielzahl an Komponenten eingespart werden, die ansonsten doppelt (bzw. mehrfach) vorzusehen wären.

Gemäß verschiedenen Ausführungsformen ist ein 3D-Drucker eingerichtet, um ein dreidimensionales Bauteil, z.B. eine Gussform oder einen Gießkern, schichtweise aufzubauen durch Ausbilden übereinander liegender Schichten von partikelförmigem Baumaterial, z.B. enthaltend Sandpartikel, und selektives Verfestigen eines Teilbereichs der jeweiligen Baumaterial-Schicht.

Der 3D-Drucker ist dabei eingerichtet (zum Beispiel ausgebildet und/oder ausgelegt und/oder strukturiert und/oder programmiert), um gleichzeitig in einem ersten Bauraum, der in dem 3D-Drucker angeordnet ist, ein oder mehrere erste dreidimensionale Bauteile und in einem zweiten Bauraum, der benachbart zu dem ersten Bauraum mit horizontalem Abstand zu diesem in dem 3D-Drucker angeordnet ist, ein oder mehrere zweite dreidimensionale Bauteile aufzubauen.

Mit anderen Worten können mit dem erfindungsgemäßen 3D-Drucker zwei oder mehrere Baujobs gleichzeitig ausgeführt werden, und zwar in zwei oder mehr voneinander benachbarten und mit horizontalem Abstand zueinander angeordneten Bauräumen. Der 3D-Drucker selbst kann bezüglich des ersten und des zweiten Bauraums dabei zum Beispiel als gemeinsamer 3D-Drucker bezeichnet werden, von dessen Komponenten (zum Beispiel Druckkopf und/oder Beschichter-Beschickungsvorrichtung und/oder Gehäuse und/oder Anlagenrahmen) ein oder mehrere von/für sowohl dem/den ersten Bauraum (zur Durchführung des ersten Baujobs) als auch dem/den zweiten Bauraum (zur Durchführung des zweiten Baujobs) gemeinschaftlich genutzt werden bzw. beiden Bauräumen zugeordnet werden können.

D.h., der 3D-Drucker ist eingerichtet, um in dem ersten Bauraum einen ersten Schichtstapel aufzubauen, der das mindestens eine erste Bauteil enthält, und zeitgleich in dem zweiten Bauraum einen zweiten Schichtstapel aufzubauen, der das mindestens eine zweite Bauteil enthält, wobei der erste und der zweite Schichtstapel voneinander getrennt in dem 3D-Drucker angeordnet sind.

Der horizontale Abstand zwischen zwei benachbarten Bauräumen kann zum Beispiel kleiner gleich 1,5 Meter sein, zum Beispiel kleiner gleich 1,4 Meter, zum Beispiel kleiner gleich 1,3 Meter, zum Beispiel kleiner gleich 1,2 Meter, zum Beispiel kleiner gleich 1,1 Meter, zum Beispiel kleiner gleich 1,0 Meter, zum Beispiel kleiner gleich 0,9 Meter, zum Beispiel kleiner gleich 0,8 Meter, zum Beispiel kleiner gleich 0,7 Meter, zum Beispiel kleiner gleich 0,6 Meter, zum Beispiel kleiner gleich 0,5 Meter, zum Beispiel kleiner gleich 0,4 Meter, zum Beispiel kleiner gleich 0,3 Meter, zum Beispiel kleiner gleich 0,2 Meter.

Der horizontale Abstand zwischen zwei benachbarten Bauräumen kann zum Beispiel dazu genutzt werden, um eine Beschichteranordnung des 3D-Druckers (ein Beispiel dieser Beschichteranordnung wird im Detail weiter unten beschrieben) in dem von dem horizontalen Abstand gebildeten Raum (zum Beispiel zusätzlich) zu befestigen (zum Beispiel an einer Linearführungsstruktur), zum Beispiel abzustützen (zum Beispiel an einer Linearführungsstruktur). Zum Beispiel kann jeder von einem ersten und einem zweiten Beschichter der Beschichteranordnung (ein Beispiel dieser Beschichter wird im Detail weiter unten beschrieben) zwischen den zwei benachbarten Bauräumen (zum Beispiel zusätzlich) befestigt (zum Beispiel abgestützt) sein, zum Beispiel an einer jeweils separaten Linearführung oder an einer gemeinsamen Linearführung. Die Linearführungsstruktur bzw. die separaten Linearführungen oder die gemeinsame Linearführung können wiederum an einem Abschnitt einer gemeinsamen Rahmenstruktur des 3D-Druckers befestigt sein.

Zum Beispiel kann der 3D-Drucker eine gemeinsame Rahmenstruktur aufweisen, in welcher sowohl der erste Bauraum als auch der zweite Bauraum angeordnet ist und welche sich mit einem Abschnitt davon zwischen zwei benachbarten Bauräumen, d.h. in dem von dem horizontalen Abstand gebildeten Raum, erstreckt. Zum Beispiel können an diesem Abschnitt der Rahmenstruktur Komponenten des 3D-Druckers befestigt sein, zum Beispiel die oben genannte Beschichteranordnung bzw. eine Linearführungsstruktur derselben.

Der erste Bauraum und/oder der zweite Bauraum können zum Beispiel an einem (von dem 3D-Drucker) jeweils festgelegten und/oder vorbestimmten Platz in dem 3D-Drucker angeordnet sein. Zum Beispiel kann die (gemeinsame) Rahmenstruktur den ersten und den zweiten Bauraum mitvorgeben. Zum Beispiel kann der 3D-Drucker je Bauraum ein oder mehrere anlagenfeste, sich in horizontaler Richtung erstreckende Baufeld-Begrenzungen aufweisen, die das Baufeld des jeweiligen Bauraums zumindest teilweise umgeben. Zum Beispiel kann je Bauraum zumindest eine anlagenfeste, sich in horizontaler Richtung erstreckende Baufeld-Begrenzung vorgesehen sein, die sich entlang einer der unten beschriebenen kurzen und langen Seiten erstreckt.

Gemäß verschiedenen Ausführungsformen kann der 3D-Drucker zum Beispiel eine erste Bauplattform und eine zweite Bauplattform aufweisen und eingerichtet sein, um die erste Bauplattform und die zweite Bauplattform gleichzeitig (zum Beispiel in horizontaler Richtung mit Abstand zueinander; alternativ zum Beispiel angrenzend aneinander, wobei zum Beispiel eine oder beide der Bauplattformen in der Draufsicht größer sind als ihr zugehöriger Bauraum) in einer jeweils zugehörigen, voneinander separaten (d.h., voneinander unterschiedlichen) ersten bzw. zweiten Bauplattform-Bauposition aufzunehmen, in welcher die jeweilige Bauplattform zum Aufbauen des mindestens einen Bauteils mittels des 3D-Druckers innerhalb des 3D-Druckers angeordnet ist und in welcher über der ersten Bauplattform der erste Bauraum und über der zweiten Bauplattform der zweite Bauraum ausgebildet/angeordnet ist. Die erste Bauplattform und die zweite Bauplattform können den jeweiligen Bauraum zum Beispiel nach unten hin begrenzen. Mit anderen Worten kann der jeweilige Bauraum zum Beispiel von einer zugehörigen Bauplattform zumindest mitdefiniert sein.

Die jeweilige Bauplattform kann dabei zum Beispiel stationär in der Anlage vorgesehen sein, d.h. optional in Höhenrichtung verstellbar aber ansonsten ortsfest sein (in ihrer Bauplattform-Bauposition), oder verfahrbar ausgebildet sein (zum Beispiel dadurch, dass sie in einer verfahrbaren Baubox aufgenommen ist oder auf einem Schienensystem verfahrbar geführt ist). In letzterem Fall kann die jeweilige Bauplattform zum Beispiel den zugehörigen Bauraum nach unten hin begrenzen, wenn sie sich in ihrer zugehörigen Bauplattform-Bauposition befindet.

Auf der Bauplattform (bzw. in dem unteren Bereich des Bauraums) kann zum Beispiel eine plattenförmige Struktur angeordnet sein, die nach dem Fertigen des Bauteils zum Entpacken desselben aus der Partikelmaterialschüttung aus nicht-verfestigtem Partikelmaterial zusammen mit der Partikelmaterialschüttung und dem Bauteil aus der Baubox entnommen wird, wohingegen die Bauplattform in der Baubox verbleiben kann.

Die erste und/oder die zweite Bauplattform können zum Beispiel in einer zugehörigen Baubox aufgenommen sein. Dies hat sich in der Praxis als zweckmäßig erwiesen; alternativ kann ein Bauteil bzw. ein dieses enthaltender Schichtstapel jedoch auch in Umfangsrichtung frei auf der Plattform aufgebaut werden.

Der horizontale Abstand zwischen den Bauplattformen - wenn diese sich in der jeweiligen Bauplattform-Bauposition befinden - kann identisch zu dem obigen horizontalem Abstand zwischen den Bauräumen sein.

Gemäß verschiedenen Ausführungsformen kann der 3D-Drucker zum Beispiel eine erste Baubox und eine zweite Baubox aufweisen und eingerichtet sein, um die erste Baubox und die zweite Baubox gleichzeitig, zum Beispiel in horizontaler Richtung mit Abstand zueinander, in einer jeweils zugehörigen, voneinander separaten ersten bzw. zweiten Baubox-Bauposition aufzunehmen, in welcher die jeweilige Baubox zum Aufbauen des mindestens einen Bauteils mittels des 3D-Druckers in dem von der jeweiligen Baubox definierten ersten bzw. zweiten Bauraum innerhalb des 3D-Druckers angeordnet ist, so dass mit dem 3D-Drucker zeitgleich in der ersten Baubox und der zweiten Baubox jeweils ein oder mehrere Bauteile schichtweise aufbaubar sind.

Mit anderen Worten kann der jeweilige Bauraum zum Beispiel von einer zugehörigen Baubox zumindest mitausgebildet werden, zum Beispiel umfangsseitig zumindest mitausgebildet werden. Die jeweilige Baubox kann dabei zum Beispiel stationär in der Anlage vorgesehen sein oder verfahrbar ausgebildet sein. In letzterem Fall definier die jeweilige Baubox den zugehörigen Bauraum, wenn sie sich in ihrer zugehörigen Baubox-Bauposition befindet.

Mit anderen Worten kann der 3D-Drucker gemäß dieser Ausführungsform als Multibox-3D-Drucker ausgebildet sein, der gleichzeitig mehrere Bauboxen aufnehmen kann, insbesondere in einem jeweiligen, festgelegten/vorbestimmten Baubox-Aufnahmeraum.

Es sollte verständlich sein, dass die Anzahl der Bauboxen, welche gleichzeitig in dem 3D-Drucker aufnehmbar sind, weiter gesteigert werden kann, zum Beispiel auf drei, vier, fünf, sechs oder mehr Bauboxen. Gleiches gilt für die oben beschriebenen Bauplattformen und allgemein für die Bauräume.

Die Bauplattformen und/oder die Bauboxen können zum Beispiel identisch ausgebildet sein.

Gemäß verschiedenen Ausführungsformen können die erste Baubox und/oder die zweite Baubox zum Beispiel eine sich in vertikaler Richtung erstreckende Umfangswandstruktur aufweisen, die einen jeweiligen Bauboxinnenraum begrenzt.

In dem von der jeweiligen Baubox definierten Bauboxinnenraum kann zum Beispiel eine sich in horizontaler Richtung erstreckende erste bzw. zweite Bauplattform aufgenommen sein, wobei zum Beispiel von dem jeweiligen Bauboxinnenraum über der jeweiligen Bauplattform ein nach oben hin offener erster bzw. zweiter Bauraum definiert wird, in dem mittels des 3D-Druckers mindestens ein Bauteil aufbaubar ist, wenn sich die Baubox in ihrer jeweils zugehörigen Baubox-Bauposition befindet.

Gemäß verschiedenen Ausführungsformen können die erste Bauplattform und/oder die zweite Bauplattform zum Beispiel höhenverstellbar sein, so dass die jeweilige Bauplattform zum Aufbauen eines Bauteils schrittweise absenkbar ist, zum Beispiel um eine jeweilige Schichtdicke. Das Absenken der jeweiligen Bauplattform kann zum Beispiel mittels eines jeweils zugeordneten, anlagenfesten Hubantriebs erfolgen, oder aber mittels eines eigenen, in die jeweilige Baubox integrierten Hubantriebs. D.h., gemäß verschiedenen Ausführungsformen kann der jeweilige Bauraum durch schrittweises Absenken der zugehörigen Bauplattform während des Bauprozesses schrittweise vergrößert werden bzw. mit dem zu fertigenden Bauteil "mitwachsen". Das schrittweise Absenken der Bauplattform hat sich in der Praxis als zweckmäßig erwiesen; alternativ kann ein Bauteil bzw. ein dieses enthaltender Schichtstapel jedoch auch aufgebaut werden, indem zum Beispiel die Druckvorrichtung und die Beschichteranordnung schrittweise angehoben werden.

Der erste und/oder der zweite Bauraum (zum Beispiel die erste und/oder die zweite Bauplattform bzw. die erste und/oder die zweite Baubox) haben in der Draufsicht zwei lange Seiten und zwei kurze Seiten. Zum Beispiel können der erste und/oder der zweite Bauraum (zum Beispiel die erste und/oder die zweite Bauplattform bzw. die erste und/oder die zweite Baubox) in der Draufsicht rechteckig ausgebildet sein. Zum Beispiel kann die jeweilige kurze Seite des ersten und/oder des zweiten Bauraums (zum Beispiel der ersten und/oder der zweiten Bauplattform) eine Abmessung von kleiner gleich 2m haben, zum Beispiel kleiner gleich 1,8m, zum Beispiel kleiner gleich 1,6m, zum Beispiel kleiner gleich 1,5m, zum Beispiel kleiner gleich 1,4m, zum Beispiel kleiner gleich 1,3m. Die Abmessung kann zum Beispiel größer gleich 0,5m sein, zum Beispiel größer gleich 0,6m, zum Beispiel größer gleich 0,7m, zum Beispiel größer gleich 0,8m, zum Beispiel größer gleich 0,9m, zum Beispiel größer gleich 1,0m. Die Beispielwerte für die untere und obere Grenze können dabei beliebig miteinander kombiniert werden, zum Beispiel wie folgt: 0,5-2m, 0,6-1,6m oder 1m-1,3m. Sind mehr als 2 Bauräume vorhanden, zum Beispiel mindestens 3, zum Beispiel mindestens 4, zum Beispiel mindestens 5, zum Beispiel mindestens 6, können die gemachten Angaben auf sämtliche Bauräume zutreffen.

Mit der beschriebenen Ausgestaltung des ersten und/oder des zweiten Bauraums kann zum einen die Handhabung des jeweiligen Bauraums erleichtert werden, zum Beispiel ein ergonomisches Entpacken des jeweiligen Bauraums bzw. der jeweiligen Baubox ermöglicht werden. Zudem kann mit der beschriebenen Ausgestaltung eine zügige Fertigung der Bauteile ermöglicht werden, insbesondere wenn die Beschichteranordnung für eine Schichtaufbringung in einer Richtung senkrecht zu der langen Seite fährt, so dass sie nur eine vergleichsweise kurze Strecke zurücklegen muss. Die Geschwindigkeit der Beschichteranordnung kann ein limitierender Faktor sein und insbesondere geringer sein als die Geschwindigkeit, mit der ein Druckkopf verfahren wird.

Gemäß verschiedenen Ausführungsformen können der erste und der zweite Bauraum (zum Beispiel die erste und/oder die zweite Bauplattform bzw. die erste und/oder die zweite Baubox) zum Beispiel entlang einer jeweiligen kurzen Seite benachbart zueinander angeordnet sein, zum Beispiel im Wesentlichen entlang der gesamten jeweiligen kurzen Seite. Zum Beispiel können der erste und der zweite Bauraum (zum Beispiel die erste und/oder die zweite Bauplattform bzw. die erste und/oder die zweite Baubox) derart zueinander angeordnet sein, dass im Wesentlichen die insgesamt vier kurzen Seiten parallel zueinander und jeweils zwei lange Seiten (eine von jedem Bauraum) in Verlängerung zueinander stehen.

Wie bereits oben angedeutet, können gemäß verschiedenen Ausführungsformen die erste und/oder die zweite Bauplattform bzw. die erste und/oder die zweite Baubox zum Beispiel zwischen ihrer jeweiligen Bauposition und einer zusätzlichen Position, in der die jeweilige Bauplattform bzw. Baubox außerhalb des 3D-Druckers angeordnet ist (und zum Beispiel für einen Benutzer gut zugänglich ist), verfahrbar sein. Dies kann zum Beispiel ein Entpacken des mindestens einen Bauteils aus der zugehörigen Baubox erleichtern.

Die jeweilige Baubox kann zum Beispiel über eine zugehörige Rollenbahn in ihre zugehörige Baubox-Bauposition und aus dieser heraus verfahrbar sein. Die jeweilige Rollenbahn (oder eine alternative Baubox-Zuführvorrichtung) kann wiederum mit einem gemeinsamen, fahrerlosen Transportsystem in Verbindung stehen, mit dem die erste und die zweite Baubox in die zusätzliche Position verfahren werden können.

In dem Fall einer verfahrbaren Baubox kann der 3D-Drucker zum Beispiel eingerichtet sein, um die jeweilige Baubox mittels eines Ausricht- und/oder Fixiermechanismus in der zugehörigen Baubox-Bauposition auszurichten und/oder zu fixieren.

Die zusätzliche Position kann zum Beispiel eine Entpackposition, in der die Baubox bzw. die darin enthaltenen Teile entpackt werden (manuell oder automatisiert), und/oder eine Bauboxvorrat-Position sein, in der ein oder mehrere Bauboxen auf Vorrat gehalten werden.

Der 3D-Drucker weist eine Beschichteranordnung auf, die in einer ersten Horizontalrichtung über den ersten und den zweiten Bauraum hinweg verfahrbar ist (also zum Beispiel über die erste und die zweite Baubox hinweg, wenn diese sich in der jeweils zugehörigen Bauposition befinden), um den ersten und den zweiten Bauraum in Form einer jeweils gleichmäßigen Baumaterial-Schicht aus dem zu verfestigenden Baumaterial mit Baumaterial zu versorgen. Die Beschichteranordnung kann zum Beispiel eingerichtet sein, um den ersten und den zweiten Bauraum parallel mit Baumaterial zu versorgen. Die Beschichteranordnung kann zum Beispiel als bidirektionale Beschichteranordnung ausgebildet sein, d.h., als eine Beschichteranordnung, die sowohl auf einer Hinfahrt als auch auf einer Rückfahrt eine gleichmäßige Baumaterial-Schicht aufbringen kann.

Die erste Horizontalrichtung ist senkrecht zu den langen Seiten und/oder parallel zu den kurzen Seiten. Hiermit kann eine zügige Fertigung der Bauteile erreicht werden. Gemäß verschiedenen Ausführungsformen kann die Beschichteranordnung zum Beispiel einen ersten Beschichter, der dem ersten Bauraum zugeordnet ist, und einen davon separaten zweiten Beschichter aufweisen, der dem zweiten Bauraum zugeordnet ist. Der erste und der zweite Beschichter können dabei in einer jeweiligen ersten Horizontalrichtung über ihren zugehörigen Bauraum verfahrbar sein, insbesondere in zueinander parallelen ersten Horizontalrichtungen, zum Beispiel gemeinsam oder separat voneinander.

Die Segmentierung in einen ersten und einen zweiten Beschichter ermöglicht dabei ein zügiges Ausbilden von gleichmäßigen Schichten für die Bauräume von zweckmäßiger Qualität, zum Beispiel bei vertretbaren Kosten und/oder bei vertretbarer Komplexität.

Gemäß verschiedenen Ausführungsformen können der erste und/oder der zweite Beschichter zum Beispiel jeweils einen Behälter (zum Beispiel langgestreckter Behälter) aufweisen, der einen inneren Hohlraum zur Aufnahme von partikelförmigem Baumaterial definiert, der in einer Öffnung (zum Beispiel einem Längsschlitz) zum Ausgeben des partikelförmigen Baumaterials auf das Baufeld des jeweiligen Bauraums mündet. Der erste und/oder der zweite Beschichter können also zum Beispiel als "Behälter-Beschichter" ausgebildet sein, zum Beispiel als "Schlitz-Beschichter". Der langgestreckte erste Beschichter/Behälter und der langgestreckte zweite Beschichter/Behälter können parallel zueinander angeordnet sein, zum Beispiel in Verlängerung zueinander bzw. in Längsrichtung hintereinander.

Zum Beispiel kann an dem ersten Beschichter und/oder dem zweiten Beschichter jeweils eine Schließvorrichtung (zum Beispiel aufweisend einen oder mehrere aufblasbare Hohlkörper, die im aufgeblasenen Zustand die Öffnung verschließen, oder einen Schiebermechanismus) angebracht sein, die eingerichtet ist, um die Öffnung zum Ausgeben des partikelförmigen Baumaterials selektiv zu verschließen, zum Beispiel gesteuert, d.h. mittels einer elektronischen Steuereinheit.

Zum Beispiel kann an dem ersten Beschichter und/oder dem zweiten Beschichter jeweils ein Streichelement angebracht sein, das eingerichtet ist, um aus der Öffnung ausgegebenes partikelförmiges Baumaterial zu überstreichen, um dadurch das ausgegebene Partikelmaterial zu nivellieren und/oder zu verdichten.

Zum Beispiel können der erste Beschichter und der zweite Beschichter fest miteinander verbunden sein, so dass sie gemeinsam über den ersten Bauraum bzw. den zweiten Bauraum hinweg verfahrbar sind.

Der 3D-Drucker weist eine gemeinsame Druckvorrichtung auf, die in einer zweiten Horizontalrichtung über den ersten und den zweiten Bauraum hinweg verfahrbar ist, um einen Teilbereich von einer zuvor aufgebrachten Baumaterial-Schicht des jeweiligen Bauraums durch gesteuertes Ausgeben eines fließfähigen Behandlungsmittels selektiv zu verfestigen. Die Druckvorrichtung kann zum Beispiel eingerichtet sein, um den ersten Bauraum und den zweiten Bauraum sequentiell mit Behandlungsmittel zu versorgen. Dabei kann die Druckvorrichtung zum Beispiel zunächst den ersten Bauraum vollständig abarbeiten (zum Beispiel vollständig überfahren), um anschließend den zweiten Bauraum vollständig abzuarbeiten. Alternativ kann die Druckvorrichtung zum Beispiel zunächst einen Teil des ersten Bauraums abarbeiten, dann einen Teil des zweiten Bauraums abarbeiten, dann einen weiteren Teil des zweiten Bauraums abarbeiten, und dann einen weiteren Teil des ersten Bauraums abarbeiten (bidirektionale Abarbeitung). Ferner alternativ kann die Druckvorrichtung zum Beispiel zunächst einen Teil des ersten Bauraums abarbeiten, dann einen Teil des zweiten Bauraums abarbeiten, dann einen weiteren Teil des ersten Bauraums abarbeiten, und dann einen weiteren Teil des zweiten Bauraums abarbeiten (unidirektionale Abarbeitung).

Das Behandlungsmittel trägt zu der selektiven Verfestigung des Teilbereichs bei und kann zum Beispiel ein Bindemittel sein, zum Beispiel eine Bindemittel-Komponente eines Mehrkomponenten-Bindemittels.

Mit anderen Worten werden der erste und der zweite Baubereich von einer gemeinsamen bzw. derselben Druckvorrichtung bedient, insbesondere von einem gemeinsamen bzw. demselben Druckkopf.

Die gemeinsame Druckvorrichtung kann zum Beispiel eine Linearführungsstruktur (zum Beispiel eine durchgängige Linearführungsstruktur) aufweisen, deren Länge im Wesentlichen größer gleich der Summe aus der ersten Bauraum-Länge und der zweiten Bauraum-Länge ist und/oder die sich im Wesentlichen vollständig entlang dem ersten und dem zweiten Bauraum erstreckt (zum Beispiel über diesen oder seitlich neben diesen), zum Beispiel in Längsrichtung des jeweiligen Bauraums. Daher kann ein gemeinsamer Druckkopf (siehe unten) sowohl den ersten Bauraum als auch den zweiten Bauraum bedienen. Die Linearführungsstruktur kann zum Beispiel an einer Trägerstruktur befestigt sein (zum Beispiel eine durchgängige Trägerstruktur), die sich über oder seitlich neben dem ersten und dem zweiten Bauraum erstreckt, zum Beispiel in Längsrichtung des jeweiligen Bauraums. Die Trägerstruktur kann zum Beispiel an der gemeinsamen Rahmenstruktur des 3D-Druckers befestigt sein.

Die zweite Horizontalrichtung ist senkrecht zu der ersten Horizontalrichtung, in der die Beschichteranordnung verfahrbar ist, und optional senkrecht zu den kurzen Seiten der Bauräume und/oder parallel zu den langen Seiten.

Die Druckvorrichtung (zum Beispiel deren Druckkopf) kann zum Beispiel neben der zweiten Horizontalrichtung zusätzlich in der ersten Horizontalrichtung verfahrbar/versetzbar sein, so dass die Druckvorrichtung (zum Beispiel deren Druckkopf) insgesamt mäanderförmig, zum Beispiel U-förmig, über die beiden Bauräume verfahrbar ist. Es ist aber auch möglich, dass sich die Druckvorrichtung (zum Beispiel deren Druckkopf) zum Beispiel über die gesamte Bauraum-Breite hinweg erstreckt bzw. diese abdeckt.

Gemäß verschiedenen Ausführungsformen kann die gemeinsame Druckvorrichtung zum Beispiel einen gemeinsamen Druckkopf mit ein oder mehreren Druckdüsen aufweisen.

Der gemeinsame Druckkopf kann zum Beispiel eingerichtet sein, um sowohl den ersten Bauraum als auch den zweiten Bauraum zu bedienen. D.h., der erste Bauraum und der zweite Bauraum werden mit demselben Druckkopf, insbesondere unter Verwendung derselben Druckdüsen, selektiv bedruckt.

Der gemeinsame Druckkopf kann zum Beispiel mit seinen Druckdüsen einen Abschnitt, zum Beispiel im Wesentlichen die Hälfte, oder die gesamte Länge/Abmessung einer jeweiligen kurzen Seite der Bauräume überspannen. D.h., der Druckkopf kann einen von den Druckdüsen gebildeten Behandlungsmittel-Ausgabebereich haben, dessen Abmessung (zum Beispiel Länge) einem Abschnitt, zum Beispiel im Wesentlichen der Hälfte, oder der gesamten Länge/Abmessung einer jeweiligen kurzen Seite entspricht.

Der gemeinsame Druckkopf kann zum Beispiel in vertikaler Richtung mit Abstand zu der Beschichteranordnung, zum Beispiel dem ersten Beschichter und dem zweiten Beschichter, angeordnet und in einer separaten Horizontalebene horizontal verfahrbar sein.

Gemäß verschiedenen Ausführungsformen kann der 3D-Drucker zum Beispiel eine in den 3D-Drucker integrierte, gemeinsame Beschichter-Beschickungseinheit aufweisen, die in vertikaler Richtung oberhalb des ersten und des zweiten Beschichters angeordnet ist und/oder mit der sowohl der erste als auch der zweite Beschichter mit Baumaterial versorgbar ist (zum Beispiel ein jeweiliger Vorlagebehälter des Beschichters, der über dem obigen Behälter des jeweiligen Beschichters angeordnet ist) und/oder die eine gemeinsame Mischeinheit aufweist, zum Beispiel aufweisend einen gemeinsamen Mischbehälter mit Rührwerk, wobei in dem Mischbehälter zubereitetes Baumaterial über eine sich verzweigende Zuführstruktur in den ersten und den zweiten Beschichter einspeisbar ist, wenn diese in eine jeweilige Befüllungsposition verfahren sind.

Gemäß verschiedenen Ausführungsformen kann der 3D-Drucker zum Beispiel eine gemeinsame Rahmenstruktur, in der sowohl der erste Bauraum als auch der zweite Bauraum angeordnet sind, und/oder ein gemeinsames Gehäuse aufweisen, in dem sowohl der erste Bauraum als auch der zweite Bauraum angeordnet sind. Das Gehäuse kann zum Beispiel einen durchgängigen Gehäuseabschnitt bzw. Wandabschnitt aufweisen, der sowohl den ersten als auch den zweiten Bauraum überdeckt, zum Beispiel jeweils überwiegend, zum Beispiel jeweils vollständig. Die gemeinsame Rahmenstruktur kann zum Beispiel durchgängig bzw. zusammenhängend ausgebildet sein. Die gemeinsame Rahmenstruktur und/oder das gemeinsame Gehäuse können zum Beispiel zumindest abschnittsweise sowohl dem ersten Bauraum als auch dem zweiten Bauraum dienen oder von diesen genutzt werden oder diesen zugeordnet sein.

Zum Beispiel kann der 3D-Drucker einen gemeinsamen Steuerschrank aufweisen.

Gemäß verschiedenen Ausführungsformen kann der 3D-Drucker zum Beispiel eine erste und eine zweite Baubox-Einführöffnung aufweisen, die zum Beispiel auf einer gemeinsamen Seite (zum Beispiel Umfangsseite) des 3D-Druckers vorgesehen sind und/oder in einer gemeinsamen Seitenwand des 3D-Druckers ausgebildet sind. Der 3D-Drucker bzw. dessen Gehäuse kann zum Beispiel eine vordere und eine hintere Seitenwand sowie zwei seitliche Seitenwände aufweisen, welche länger ausgebildet sind als die vordere und die hintere Seitenwand, wobei in einer der zwei seitlichen Seitenwände die erste und die zweite Baubox-Einführöffnung vorgesehen sind.

Gemäß verschiedenen Ausführungsformen kann eine 3D-Druckeranordnung zum Beispiel aufweisen:
einen wie oben beschrieben ausgebildeten (ersten) 3D-Drucker und
ein fahrerloses Transportsystem zur automatischen Beschickung des 3D-Druckers mit Bauboxen.

Das fahrerlose Transportsystem kann zum Beispiel ein Schienensystem aufweisen, das sich außerhalb des 3D-Druckers auf der Seite der ersten und der zweiten Baubox-Einführöffnung erstreckt und entlang dem eine jeweilige der ersten und der zweiten Baubox verfahrbar ist. Das fahrerlose Transportsystem kann zum Beispiel einen Transportwagen aufweisen, der entlang des Schienensystems verfahrbar ist und mindestens eine Baubox transportieren kann.

Das fahrerlose Transportsystem, zum Beispiel das Schienensystem, kann den oder die 3D-Drucker zum Beispiel verbinden mit einem optionalen Baubox-Vorrat, in dem ein oder mehrere Bauboxen vorgehalten werden, und/oder einem optionalen Mikrowellen-Ofen, zum Beispiel zum weiteren Verfestigen bzw. vollständigen Aushärten der Bauteile, und/oder einer optionalen Entpack-Station, wo ein Bauteil aus der das Bauteil enthaltenden Partikelmaterialschüttung aus nicht-verfestigtem Baumaterial entpackt werden kann (zum Beispiel automatisiert) und optional in einen Bauteil-Vorrat eingelagert werden kann.

Gemäß verschiedenen Ausführungsformen kann die 3D-Druckeranordnung zum Beispiel einen ersten und einen zweiten 3D-Drucker aufweisen, wobei der erste und der zweite 3D-Drucker derart gegenüberliegend angeordnet sind, dass die erste und die zweite Baubox-Einführöffnung des ersten 3D-Druckers und die erste und die zweite Baubox-Einführöffnung des zweiten 3D-Druckers einander zugewandt sind und sich das fahrerlose Transportsystem, zum Beispiel dessen Schienensystem, zwischen dem ersten und dem zweiten 3D-Drucker erstreckt bzw. zwischen diesen verfahrbar ist, so dass der erste und der zweite 3D-Drucker über das gemeinsame fahrerlose Transportsystem, zum Beispiel dessen Schienensystem, mit jeweiligen Bauboxen beschickt werden können.

Gemäß verschiedenen Ausführungsformen kann ein generatives Fertigungsverfahren bereitgestellt sein, bei dem in einem ersten Bauraum und einem zu dem ersten Bauraum benachbart angeordneten, zweiten Bauraum eines gemeinsamen 3D-Druckers, der wie oben beschrieben ausgebildet ist, gleichzeitig jeweils ein oder mehrere dreidimensionale Bauteile, z.B. eine Gussform oder ein Gießkern, in einem jeweiligen Baujob schichtweise aufgebaut werden, zum Beispiel durch Ausbilden übereinander liegender Schichten von partikelförmigem Baumaterial, z.B. enthaltend Sandpartikel, und selektives Verfestigen eines Teilbereichs der jeweiligen Baumaterial-Schicht in dem jeweiligen Baubereich. Wie oben für den 3D-Drucker beschrieben, können die beiden Bauräume zum Beispiel mit horizontalem Abstand zueinander angeordnet sein.

Mit dem beschriebenen Verfahren können also gleichzeitig, d.h. zeitlich überlappend, ein erster Baujob in einem ersten Bauraum und ein zweiter Baujob in einem zweiten Bauraum mit einem gemeinsamen bzw. demselben 3D-Drucker abgearbeitet werden. Der erste Baujob und der zweite Baujob können zum Beispiel die gleiche Zeitdauer haben oder unterschiedlich lange dauern, in welchem Fall nach Beendigung eines ersten von den beiden Baujobs, der zweite Baujob allein abgearbeitet wird. Der oben beschriebene Beschichter des fertigen Baujobs kann dann "abgeschaltet" werden, und die oben beschriebene gemeinsame Druckvorrichtung kann sich allein auf den zweiten Baujob konzentrieren. Auch kann die dem ersten Baujob zugeordnete Baubox bereits für ein Entpacken entnommen werden. Der erste und der zweite Baujob können zum Beispiel zusammen begonnen/gestartet werden, oder alternativ nacheinander begonnen werden, d.h. es kann ein zweiter Baujob zu einem bereits gestarteten ersten Baujob "zugeschaltet" werden.

Gemäß verschiedenen Ausführungsformen kann/können bei dem generativen Fertigungsverfahren:
der erste Bauraum über einer ersten Bauplattform und der zweite Bauraum über einer zweiten Bauplattform angeordnet sein und/oder
der erste Bauraum von einer ersten Baubox und der zweite Bauraum von einer zweiten Baubox definiert werden/sein und/oder
der erste Bauraum und der zweite Bauraum in der Draufsicht jeweils zwei lange und zwei kurze Seiten haben, wobei der erste und der zweite Bauraum zum Beispiel mit zwei kurzen Seiten benachbart zueinander angeordnet sind,
jeder Bauraum von einem separaten Beschichter bedient werden, wozu der jeweilige Beschichter seinen zugehörigen Bauraum zum Beispiel senkrecht zu dessen langen Seiten überfährt, und/oder
beide Bauräume von einem gemeinsamen Druckkopf bedient werden, wozu der gemeinsame Druckkopf den ersten und den zweiten Bauraum zum Beispiel senkrecht zu deren kurzen Seiten überfährt, zum Beispiel in Mäanderform, zum Beispiel in U-Form, und/oder
der gemeinsame Druckkopf in einer ersten Horizontalebene und die beiden Beschichter in einer zweiten Horizontalebene verfahren werden, die mit vertikalem Abstand zu der ersten Horizontalebene angeordnet ist und sich zum Beispiel unterhalb dieser befindet, und/oder
der Druckkopf mit höherer Geschwindigkeit verfahren wird als der jeweilige Beschichter (zum Beispiel kann der Drucker um den Faktor 3 oder mehr schneller verfahren werden als der Beschichter; zum Beispiel kann der Drucker mit ungefähr 1m/s verfahren werden, wohingegen der Beschichter mit ungefähr 0,2m/s verfahren wird) und/oder
der erste Bauraum und der zweite Bauraum in einem gemeinsamen Gehäuse untergebracht sind, und/oder
der erste Bauraum und der zweite Bauraum in einer gemeinsamen Rahmenstruktur angeordnet sind und/oder
der erste Beschichter und der zweite Beschichter von einer gemeinsamen Beschickungseinheit mit Baumaterial beschickt werden.

Weitere Merkmale und Vorteile der vorliegenden Erfindung sind ersichtlich aus oder im Detail dargelegt in der angehängten Zeichnung, welche hierin mitaufgenommen ist, sowie der folgenden detaillierten Beschreibung, welche zusammen dazu dienen, bestimmte Prinzipien der vorliegenden Erfindung zu erläutern.

Die Erfindung wird im Folgenden anhand verschiedener Ausführungsformen mit Bezugnahme auf die Zeichnung näher erläutert. In der Zeichnung zeigen:
Figur 1 eine schematische Perspektivansicht eines 3D-Druckers gemäß einer ersten Ausführungsform der Erfindung.
Figur 2 eine schematische Perspektivansicht eines 3D-Druckers gemäß einer zweiten Ausführungsform der Erfindung, wobei einige Komponenten des 3D-Druckers weggelassen sind, zum Beispiel das Gehäuse und die Beschichter-Beschickungseinheit.
Figur 3 eine schematische Perspektivansicht des 3D-Druckers aus Figur 2, wobei nun auch ein Großteil des Gehäuses gezeigt ist, und wobei zudem ein Teil der Beschichter-Beschickungseinheit zu erkennen ist.
Die Figuren 4 bis 14 schematische Perspektivansichten des 3D-Druckers aus den Figuren 2 und 3, mit denen die Herstellung eines Bauteils unter Verwendung des 3D-Druckers verdeutlicht werden soll.
Die Figuren 15 und 16 eine 3D-Druckeranorndung gemäß einer Ausführungsform der Erfindung.
Figur 17 eine mögliche Ausgestaltung einer Beschichteranordnung zur Verwendung in einem erfindungsgemäßen 3D-Drucker.
Figur 18 eine Querschnittsansicht durch einen Beschichter zur Verwendung in der Beschichteranordnung aus Figur 17.

In der folgenden ausführlichen Beschreibung wird auf die beigefügte Zeichnung Bezug genommen, die einen Teil dieser bildet und in der zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

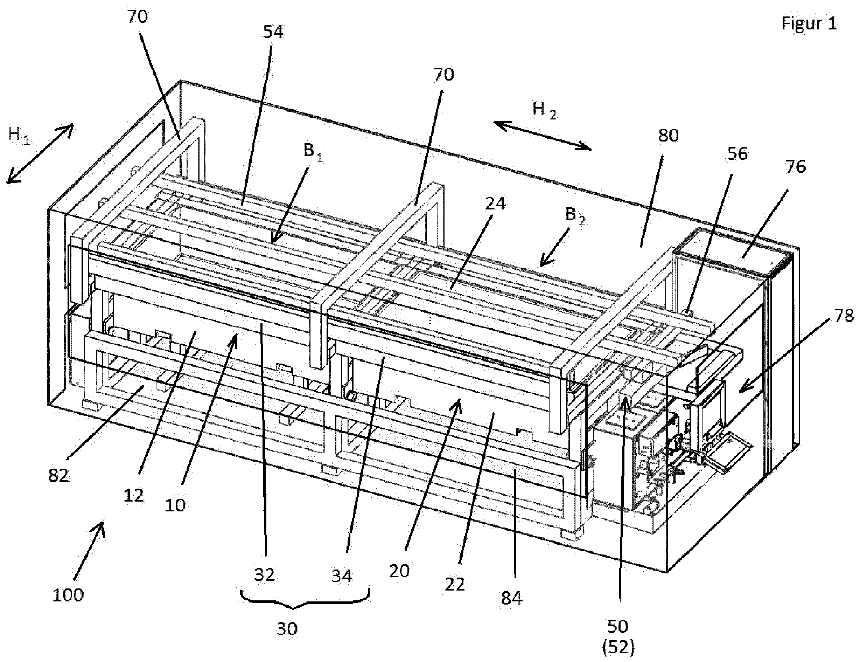

**Figur 1** zeigt eine schematische Perspektivansicht eines 3D-Druckers 100 gemäß einer ersten Ausführungsform der Erfindung.

Der gezeigte 3D-Drucker 100 ist eingerichtet, um ein dreidimensionales Bauteil, z.B. eine Gussform oder einen Gießkern, schichtweise aufzubauen durch Ausbilden übereinander liegender Schichten von partikelförmigem Baumaterial, z.B. enthaltend Sandpartikel, und selektives Verfestigen eines Teilbereichs der jeweiligen Baumaterial-Schicht. Hierzu kann der 3D-Drucker zum Beispiel ein selektives Behandlungsmittel-Aufdruck-Verfahren anwenden/ausführen.

Der 3D-Drucker 100 ist eingerichtet, um gleichzeitig in einem ersten Bauraum B1, der in dem 3D-Drucker angeordnet ist, ein oder mehrere erste dreidimensionale Bauteile und in einem zweiten Bauraum B2, der benachbart zu dem ersten Bauraum mit horizontalem Abstand zu diesem in dem 3D-Drucker angeordnet ist, ein oder mehrere zweite dreidimensionale Bauteile aufzubauen.

Wie in Figur 1 gezeigt, kann der 3D-Drucker 100 zum Beispiel eine erste Baubox 10 und eine zweite Baubox 20 aufweisen, die hier beispielgebend als mobile Bauboxen ausgebildet sind, die nach dem jeweiligen Baujob für ein Entpacken der Bauteile aus dem 3D-Drucker 100 entnehmbar sind.

Wie gezeigt, kann der 3D-Drucker 100 zum Beispiel eingerichtet sein, um die erste Baubox 10 und die zweite Baubox 20 gleichzeitig in einer jeweils zugehörigen, voneinander separaten ersten bzw. zweiten Baubox-Bauposition aufzunehmen. In ihrer Baubox-Bauposition definiert die jeweilige Baubox den ersten bzw. den zweiten Bauraum.

Folglich können mit dem 3D-Drucker 100 zeitgleich in der ersten Baubox 10 ein erster Schichtstapel und in der zweiten Baubox 20 ein zweiter Schichtstapel aufgebaut werden, wobei jeder Schichtstapel ein oder mehrere Bauteile enthält, die in nichtverfestigtes Partikelmaterial eingebettet sind (zumindest abschnittsweise).

Wie gezeigt, können die erste Baubox 10 und/oder die zweite Baubox 20 zum Beispiel eine sich in vertikaler Richtung erstreckende Umfangswandstruktur 12 bzw. 22 aufweisen, die einen jeweiligen Bauboxinnenraum begrenzt. Hier hat die jeweilige vertikale Umfangswandstruktur beispielgebend eine in der Draufsicht rechteckige Form, mit zwei langen und zwei kurzen Seiten.

Wie gezeigt, kann zum Beispiel in dem jeweiligen Bauboxinnenraum eine sich in horizontaler Richtung erstreckende erste bzw. zweite Bauplattform aufgenommen sein. In Figur 1 ist dabei die Bauplattform 24 der zweiten Baubox 20 zu sehen, wohingegen die Bauplattform der ersten Baubox 10 nach unten gefahren ist.

Von dem jeweiligen Bauboxinnenraum wird dabei über der jeweiligen Bauplattform ein nach oben hin offener erster bzw. zweiter Bauraum B1 bzw. B2 definiert, in dem mittels des 3D-Druckers mindestens ein Bauteil aufbaubar ist, wenn sich die Baubox in ihrer jeweils zugehörigen Baubox-Bauposition befindet.

Die erste Bauplattform und/oder die zweite Bauplattform 24 können zum Beispiel höhenverstellbar sein, so dass die jeweilige Bauplattform zum Aufbauen eines Bauteils schichtweise absenkbar ist. Der Bauraum B1 bzw. B2 kann im Verlauf des jeweiligen Baujobs also schrittweise vergrößert werden.

Wie in Figur 1 gezeigt, haben gemäß der Erfindung der erste Bauraum B1 und der zweite Bauraum B2 in der Draufsicht zwei lange Seiten und zwei kurze Seiten. Die jeweilige kurze Seite kann zum Beispiel eine Abmessung von kleiner gleich 1,8m haben, was ein ergonomisches Entpacken der Bauteile durch Ablaufen der beiden langen Seiten der jeweiligen Baubox 10 bzw. 12 ermöglicht.

Wie ferner in Figur 1 gezeigt, können der erste Bauraum B1 und der zweite Bauraum B2 zum Beispiel entlang einer jeweiligen kurzen Seite benachbart zueinander angeordnet sein, zum Beispiel im Wesentlichen entlang der gesamten jeweiligen kurzen Seite. Mit anderen Worten können sich die beiden Bauräume B1 und B2 mit zwei kurzen Seiten gegenüberliegen, wohingegen jeweils zwei lange Seiten in Verlängerung zueinander liegen.

Wie in Figur 1 gezeigt, weist der 3D-Drucker 100 gemäß der Erfindung eine Beschichteranordnung 30 auf, die in einer ersten Horizontalrichtung H1 über den ersten Bauraum B1 und den zweiten Bauraum B2 hinweg verfahrbar ist, um den ersten und den zweiten Bauraum in Form einer jeweils gleichmäßigen Baumaterial-Schicht aus dem zu verfestigenden Baumaterial mit Baumaterial zu versorgen.

Wie gezeigt, ist gemäß der Erfindung die erste Horizontalrichtung H1 dabei senkrecht zu den langen Seiten und/oder parallel zu den kurzen Seiten sein.

Die Beschichteranordnung 30 kann zum Beispiel einen ersten Beschichter 32, der dem ersten Bauraum B1 zugeordnet ist, und einen davon separaten zweiten Beschichter 34 aufweisen, der dem zweiten Bauraum B2 zugeordnet ist.

Der erste Beschichter 32 und der zweite Beschichter 34 können zum Beispiel fest miteinander verbunden sein, so dass sie gemeinsam über den ersten Bauraum bzw. den zweiten Bauraum hinweg verfahrbar sind.

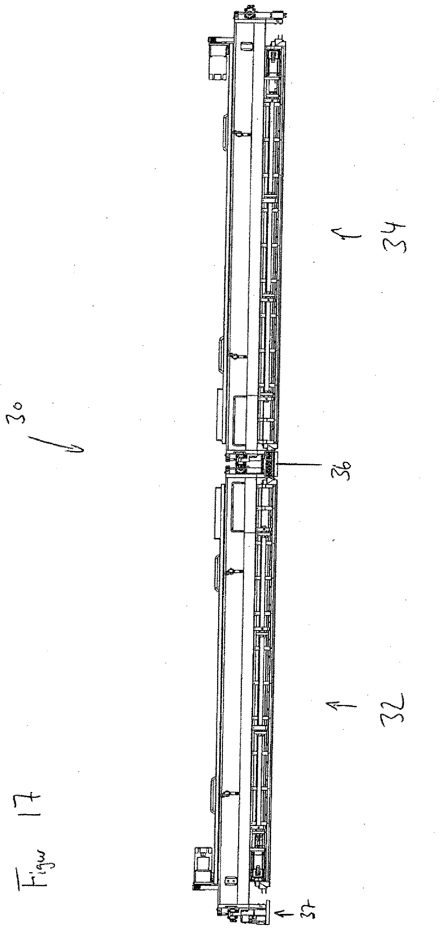

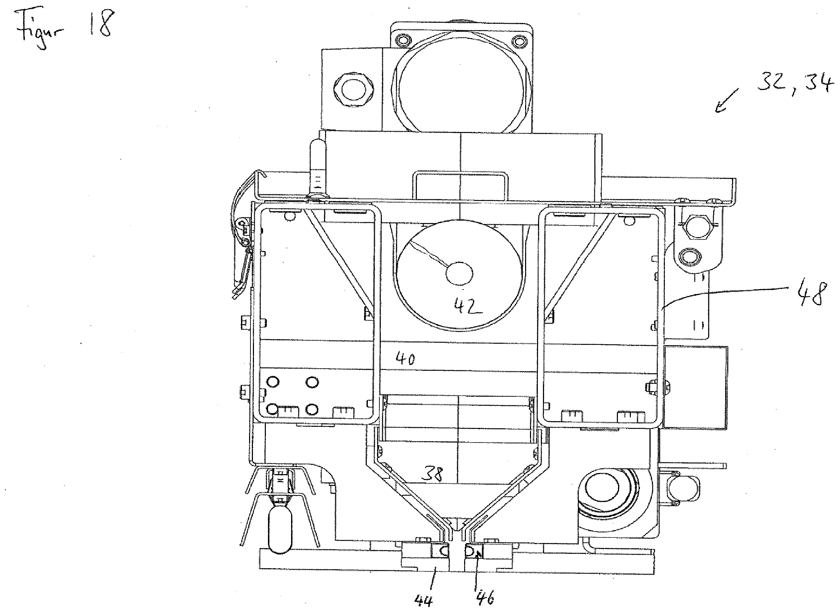

Ein Beispiel für eine solche Beschichteranordnung 30 wird weiter unten mit Bezug auf Figur 17 beschrieben, und ein Beispiel eines Beschichters 32, 34 wird weiter unten mit Bezug auf Figur 18 beschrieben.

Wie in Figur 1 gezeigt, weist der 3D-Drucker 100 gemäß der Erfindung eine gemeinsame Druckvorrichtung 50 auf, die in einer zweiten Horizontalrichtung H2 über den ersten Bauraum B1 und den zweiten Bauraum B2 hinweg verfahrbar ist, um einen Teilbereich von einer zuvor aufgebrachten Baumaterial-Schicht des jeweiligen Bauraums durch gesteuertes Ausgeben eines fließfähigen Behandlungsmittels, zum Beispiel Bindemittel, selektiv zu verfestigen.

Wie gezeigt, ist die zweite Horizontalrichtung H2 gemäß der Erfindung senkrecht zu der ersten Horizontalrichtung H1 und kann senkrecht zu den kurzen Bauraum-Seiten sein.

Die gemeinsame Druckvorrichtung 50 weist gemäß der Erfindung einen gemeinsamen Druckkopf 52 auf, der ein oder mehrere Druckdüsen aufweist. Der Druckkopf 52 kann sowohl den ersten Bauraum B1 als auch den zweiten Bauraum B2 mit dem Behandlungsmittel versorgen. Mit anderen Worten teilen sich der erste Bauraum B1 und der zweite Bauraum B2 den Druckkopf 52 bzw. dessen ein oder mehrere Druckdüsen.

Wie gezeigt, kann die Druckvorrichtung 50 zum Beispiel eine Führungsstruktur 54 aufweisen, die sich in Längsrichtung des jeweiligen Bauraums im Wesentlichen vollständig entlang der beiden Bauräume B1 und B2 erstreckt (hier beispielgebend vertikal über den Bauräumen) und entlang welcher der Druckkopf 52 in der zweiten Horizontalrichtung H2 verfahrbar ist.

Der Druckkopf 52 kann einen von den Druckdüsen gebildeten Behandlungsmittel-Ausgabebereich haben, dessen längliche Erstreckung zum Beispiel einem Abschnitt, zum Beispiel wie gezeigt im Wesentlichen der Hälfte, der Länge/Abmessung einer jeweiligen kurzen Bauraum-Seite entspricht. Wie gezeigt, kann die Druckvorrichtung 50 dabei zum Beispiel eine zweite Führungsstruktur 56 aufweisen, die gemeinsam mit dem Druckkopf entlang der ersten Führungsstruktur 54 verfahrbar ist und entlang der der Druckkopf 52 in der ersten Horizontalrichtung H1 verfahrbar ist, so dass der Druckkopf 52 insgesamt in einer Mäanderform, zum Beispiel U-Form, über die beiden Bauräume B1 und B2 verfahrbar ist.

In vertikaler Richtung kann der Druckkopf 52 zum Beispiel mit Abstand zu dem ersten Beschichter 32 und dem zweiten Beschichter 34 angeordnet sein und folglich in einer separaten Horizontalebene horizontal verfahrbar sein, zum Beispiel über den Beschichtern.

Wie ferner aus Figur 1 ersichtlich, kann der 3D-Drucker 100 zum Beispiel eine gemeinsame Rahmenstruktur 70 aufweisen, in der sowohl der erste Bauraum B1, hier beispielgebend gebildet durch die erste Baubox 10, als auch der zweite Bauraum B2, hier beispielgebend gebildet durch die zweite Baubox 20, angeordnet sind.

Wie ferner aus Figur 1 ersichtlich, kann der 3D-Drucker 100 zum Beispiel ein gemeinsames Gehäuse 80 aufweisen, in dem sowohl der erste Bauraum B1, hier beispielgebend gebildet durch die erste Baubox 10, als auch der zweite Bauraum B2, hier beispielgebend gebildet durch die zweite Baubox 20, untergebracht sind. Wie gezeigt, kann das gemeinsame Gehäuse zum Beispiel einen zusammenhängenden Gehäuseabschnitt bzw. Wandabschnitt aufweisen, der sowohl den ersten Bauraum als auch den zweiten Bauraum zumindest teilweise überdeckt.

Wie ferner aus Figur 1 ersichtlich, kann der 3D-Drucker 100 zum Beispiel eine erste Baubox-Einführöffnung 82 und eine zweite Baubox-Einführöffnung 84 aufweisen, die zum Beispiel auf einer gemeinsamen Seite des 3D-Druckers 100 vorgesehen sein können und durch die die erste Baubox 10 bzw. die zweite Baubox 20 in ihre jeweilige Baubox-Bauposition innerhalb des 3D-Druckers eingebracht werden können.

Wie ferner aus Figur 1 ersichtlich, kann der 3D-Drucker 100 zum Beispiel einen gemeinsamen Steuerschrank 76 sowie eine gemeinsame Bedienstation 78, zum Beispiel mit einem gemeinsamen Bedienpanel, aufweisen.

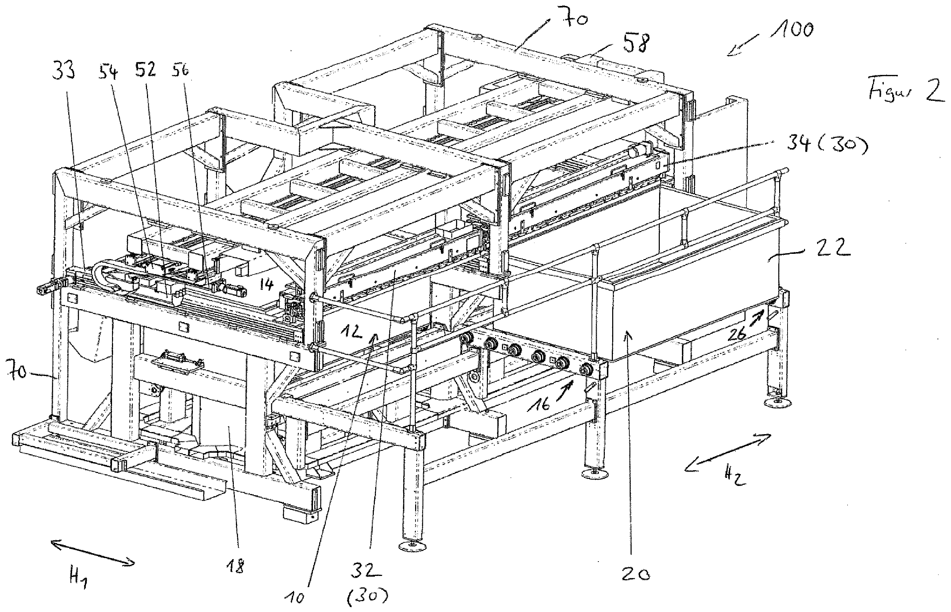

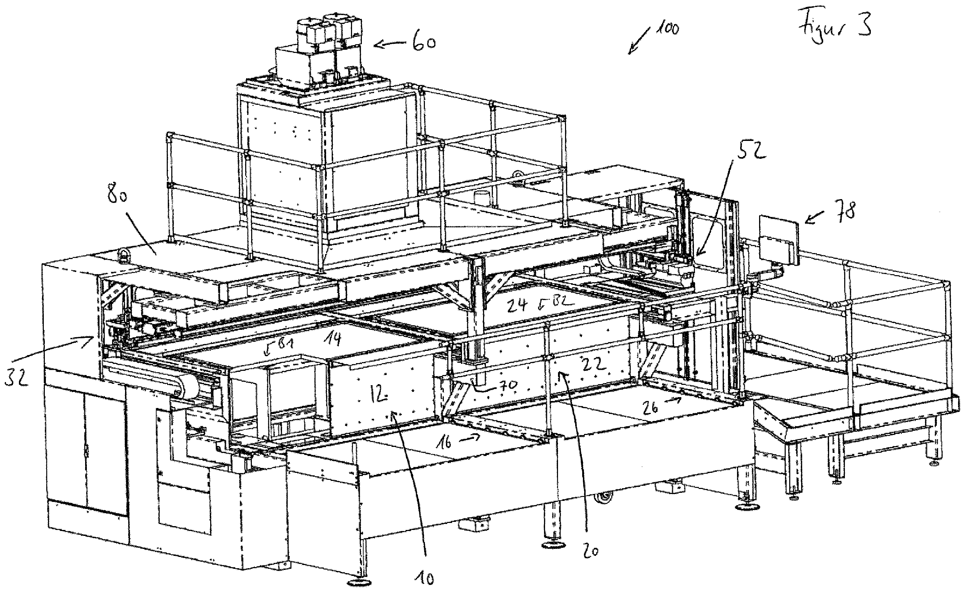

**Die** **Figuren 2** **und** **3** zeigen jeweils eine schematische Perspektivansicht eines 3D-Druckers gemäß einer zweiten Ausführungsform der Erfindung, wobei in Figur 2 einige Komponenten des 3D-Druckers weggelassen sind, zum Beispiel das Gehäuse und die Beschichter-Beschickungseinheit. Ferner ist in Figur 3 vorne links ein Teil des 3D-Druckers freigeschnitten, um zum Beispiel die erste Bauplattform sichtbar zu machen.

Auf eine Beschreibung von Merkmalen, die zu denen des 3D-Druckers der ersten Ausführungsform ähnlich oder identisch sind, wird im Folgenden teilweise verzichtet.

Der 3D-Drucker 100 gemäß der zweiten Ausführungsform ist eingerichtet, um ein dreidimensionales Bauteil schichtweise aufzubauen durch Ausbilden übereinander liegender Schichten von partikelförmigem Baumaterial und selektives Verfestigen eines Teilbereichs der jeweiligen Baumaterial-Schicht, zum Beispiel mittels eines selektiven Behandlungsmittel-Aufdruck-Verfahrens.

Der 3D-Drucker 100 ist ferner eingerichtet, um gleichzeitig in einem ersten Bauraum B1, der in dem 3D-Drucker angeordnet ist, ein oder mehrere erste dreidimensionale Bauteile und in einem zweiten Bauraum B2, der benachbart zu dem ersten Bauraum mit horizontalem Abstand zu diesem in dem 3D-Drucker angeordnet ist, ein oder mehrere zweite dreidimensionale Bauteile aufzubauen.

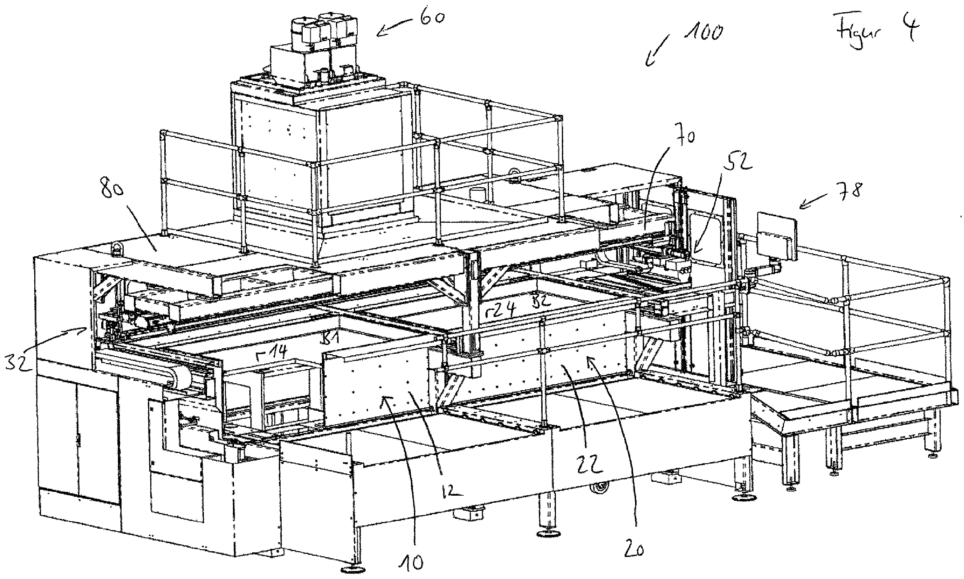

Wie in der ersten Ausführungsform, kann auch der 3D-Drucker 100 gemäß der zweiten Ausführungsform zum Beispiel eine erste Baubox 10 und eine zweite Baubox 20 aufweisen, die hier erneut beispielgebend als mobile Bauboxen ausgebildet sind, die nach dem jeweiligen Baujob für ein Entpacken der Bauteile aus dem 3D-Drucker 100 entnehmbar sind. Der 3D-Drucker 100 ist dabei eingerichtet, um die erste Baubox 10 und die zweite Baubox 20 gleichzeitig in einer jeweils zugehörigen, voneinander separaten ersten bzw. zweiten Baubox-Bauposition aufzunehmen. Wie in Figur 2 gezeigt, können die erste Baubox 10 und/oder die zweite Baubox 20 zum Beispiel eine sich in vertikaler Richtung erstreckende Umfangswandstruktur 12 bzw. 22 aufweisen, die einen jeweiligen Bauboxinnenraum begrenzt. Hier hat die jeweilige vertikale Umfangswandstruktur beispielgebend eine in der Draufsicht rechteckige Form. Wie in Figur 3 gezeigt, kann zum Beispiel in dem jeweiligen Bauboxinnenraum eine sich in horizontaler Richtung erstreckende erste Bauplattform 14 bzw. zweite Bauplattform 24 aufgenommen sein. Die erste Bauplattform 12 und/oder die zweite Bauplattform 24 können zum Beispiel höhenverstellbar sein, so dass die jeweilige Bauplattform zum Aufbauen eines Bauteils schichtweise absenkbar ist. In diesem Zusammenhang bezeichnet das Bezugszeichen 18 einen stationären, anlagenfesten Hubantrieb für die erste Baubox 10. Es kann aber zum Beispiel auch ein in die Baubox integrierter Hubantrieb verwendet werden. Von dem jeweiligen Bauboxinnenraum wird dabei über der jeweiligen Bauplattform ein nach oben hin offener erster bzw. zweiter Bauraum B1 bzw. B2 definiert, in dem mittels des 3D-Druckers mindestens ein Bauteil aufbaubar ist, wenn sich die Baubox in ihrer jeweils zugehörigen Baubox-Bauposition befindet. Vergleiche Figur 4.

Wie gezeigt, haben gemäß der Erfindung der erste Bauraum B1 und der zweite Bauraum B2 in der Draufsicht zwei lange Seiten und zwei kurze Seiten.

Wie in der ersten Ausführungsform, kann die jeweilige kurze Seite zum Beispiel eine Abmessung von kleiner gleich 1,8m haben. Wie in der ersten Ausführungsform können die beiden Bauräume entlang zweier kurzer Seiten benachbart zueinander angeordnet sein.

In den Figuren 2 und 3 ist zudem eine jeweilige optionale Baubox-Zuführvorrichtung 16 und 26 gezeigt, mit der die erste Baubox 10 bzw. die zweite Baubox 20 in ihre Baubox-Bauposition innerhalb des 3D-Druckers verfahrbar ist. Wie gezeigt, kann die jeweilige Baubox-Zuführvorrichtung zum Beispiel als Rollenbahn ausgebildet sein.

Wie in den Figuren 2 und 3 gezeigt, weist gemäß der Erfindung der 3D-Drucker 100 eine Beschichteranordnung 30 auf, die in einer ersten Horizontalrichtung H1 über den ersten Bauraum B1 und den zweiten Bauraum B2 hinweg verfahrbar ist, um den ersten und den zweiten Bauraum in Form einer jeweils gleichmäßigen Baumaterial-Schicht aus dem zu verfestigenden Baumaterial mit Baumaterial zu versorgen, zum Beispiel parallel zueinander. Wie gezeigt, ist gemäß der Erfindung die erste Horizontalrichtung H1 dabei senkrecht zu den langen Seiten und/oder parallel zu den kurzen Seiten sein, und die Beschichteranordnung 30 kann zum Beispiel einen ersten Beschichter 32, der dem ersten Bauraum B1 zugeordnet ist, und einen davon separaten zweiten Beschichter 34 aufweisen, der dem zweiten Bauraum B2 zugeordnet ist. Ein Beispiel für eine solche Beschichteranordnung 30 wird weiter unten mit Bezug auf Figur 17 beschrieben, und ein Beispiel eines Beschichters 32, 34 wird weiter unten mit Bezug auf Figur 18 beschrieben.

Wie in Figur 2 gezeigt, kann der 3D-Drucker zum Beispiel eine lineare Führungsstruktur 33 aufweisen, an der ein Längsende (hier das linke) des ersten Beschichters 32 linearverfahrbar geführt ist. Eine weitere lineare Führungsstruktur kann zum Beispiel an dem Längsende (hier das rechte) des zweiten Beschichters 34 vorgesehen sein. Eine noch weitere lineare Führungsstruktur kann zum Beispiel zwischen den zwei Beschichtern 32, 34 vorgesehen sein. Die jeweilige lineare Führungsstruktur kann sich zum Beispiel an der gemeinsamen Rahmenstruktur 70 abstützen.

Wie in den Figuren 2 und 3 gezeigt, weist gemäß der Erfindung der 3D-Drucker 100 eine gemeinsame Druckvorrichtung 50 auf, die in einer zweiten Horizontalrichtung H2 über den ersten Bauraum B1 und den zweiten Bauraum B2 hinweg verfahrbar ist (zum Beispiel nacheinander), um einen Teilbereich von einer zuvor aufgebrachten Baumaterial-Schicht des jeweiligen Bauraums durch gesteuertes Ausgeben eines fließfähigen Behandlungsmittels selektiv zu verfestigen. Wie gezeigt, ist gemäß der Erfindung die zweite Horizontalrichtung senkrecht zu der ersten Horizontalrichtung H1.

Auch wenn sich eine zueinander senkrechte Ausrichtung von erster und zweiter Horizontalrichtung in der Praxis bewährt hat, ist es grundsätzlich möglich, zum Beispiel in derselben Horizontalrichtung sowohl zu beschichten als auch zu drucken, zum Beispiel jeweils in Längsrichtung der beiden Bauräume, also entlang der Richtung H₂.

Die gemeinsame Druckvorrichtung 50 weist gemäß der Erfindung einen gemeinsamen Druckkopf 52 auf und kann eine Führungsstruktur 54 (zum Beispiel Linear-Führungsstruktur) aufweisen, entlang welcher der Druckkopf 52 verfahrbar ist. Die Führungsstruktur 54 kann sich zum Beispiel in Längsrichtung des jeweiligen Bauraums im Wesentlichen vollständig entlang beider Bauräume B1 und B2 erstrecken, so dass der Druckkopf in der zweiten Horizontalrichtung H2 verfahrbar ist.

Wie in Figur 2 gezeigt, kann der 3D-Drucker 100 zum Beispiel eine Trägerstruktur 58 (zum Beispiel eine längliche, durchgängige Trägerstruktur) aufweisen, an der die erste Führungsstruktur 54 befestigt ist und die selbst an der Rahmenstruktur 70 des 3D-Druckers befestigt ist.

Der Druckkopf 52 kann einen von den Druckdüsen gebildeten Behandlungsmittel-Ausgabebereich haben, dessen längliche Erstreckung zum Beispiel einem Abschnitt, zum Beispiel wie gezeigt im Wesentlichen der Hälfte, der Länge/Abmessung einer jeweiligen kurzen Bauraum-Seite entspricht. Wie gezeigt, kann die Druckvorrichtung 50 dabei zum Beispiel eine zweite Führungsstruktur 56 aufweisen, die gemeinsam mit dem Druckkopf entlang der ersten Führungsstruktur 54 verfahrbar ist und entlang der der Druckkopf 52 in der ersten Horizontalrichtung H1 verfahrbar ist, so dass der Druckkopf 52 insgesamt in einer Mäanderform, zum Beispiel U-Form, über die beiden Bauräume B1 und B2 verfahrbar ist.

Wie in Figur 3 gezeigt, kann der 3D-Drucker 100 zum Beispiel eine integrierte, gemeinsame Beschichter-Beschickungseinheit 60 aufweisen. Die Beschichter-Beschickungseinheit 60 ist zum Beispiel wie gezeigt in vertikaler Richtung oberhalb des ersten und des zweiten Beschichters 32, 34 angeordnet. Mit der Beschichter-Beschickungseinheit 60 kann sowohl der erste als auch der zweite Beschichter 32, 34 mit Baumaterial versorgt werden. Zum Beispiel kann die Beschichter-Beschickungseinheit 60 eine (nicht-gezeigte) gemeinsame Mischeinheit aufweisen, zum Beispiel aufweisend einen gemeinsamen Mischbehälter mit Rührwerk, wobei in dem Mischbehälter zubereitetes Baumaterial über eine sich verzweigende Zuführstruktur in den ersten und den zweiten Beschichter 32, 34 einspeisbar ist, wenn diese in eine jeweilige Befüllungsposition verfahren sind. Hierzu kann der jeweilige Beschichter zum Beispiel einen Baumaterial-Zuführschacht aufweisen, der zum Beispiel im Querschnitt eine Trichterform aufweist. Für den ersten Beschichter 32 ist in Figur 2 auf der rechten Seite des Beschichters ein solcher Baumaterial-Zuführschacht zu erkennen, wobei der Beschichter ansonsten nach oben hin geschlossen ist. Der zweite Beschichter 34 kann zum Beispiel mit einem analogen Baumaterial-Zuführschacht versehen sein, zum Beispiel an seinem dem ersten Beschichter 32 zugewandten Längsende. Der in Figur 3 sichtbare Teil der Beschichter-Beschickungseinheit 60 umfasst einen ersten und einen zweiten Vorrat-Behälter, von denen aus der Mischbehälter mit einer jeweiligen Baumaterial-Komponente (zum Beispiel einem Partikelmaterial) versorgbar ist. Ferner können in den Mischbehälter ein oder mehrere Flüssigkeits-Zuführleitungen münden.

Die **Figuren 4 bis 14** zeigen schematische Perspektivansichten des 3D-Druckers 100 aus den Figuren 2 und 3, mit denen im Folgenden die Herstellung eines Bauteils unter Verwendung des 3D-Druckers 100 gemäß einer beispielgebenden Ausführungsform beschrieben wird. Um das Verfahren besser illustrieren zu können, wurde dabei in den Figuren ein Teil des 3D-Druckers freigeschnitten (gemäß der gewählten Ansicht vorne links).

Der 3D-Drucker 100 führt dabei ein generatives Fertigungsverfahren aus, bei dem in einem ersten Bauraum B1 und einem zu dem ersten Bauraum benachbart und mit horizontalem Abstand angeordneten, zweiten Bauraum B2 eines gemeinsamen 3D-Druckers 100 ein oder mehrere dreidimensionale Bauteile, z.B. eine Gussform oder ein Gießkern, in einem jeweiligen Baujob schichtweise aufgebaut werden durch Ausbilden übereinander liegender Schichten von partikelförmigem Baumaterial, z.B. enthaltend Sandpartikel, und selektives Verfestigen eines Teilbereichs der jeweiligen Baumaterial-Schicht in dem jeweiligen Bauraum.

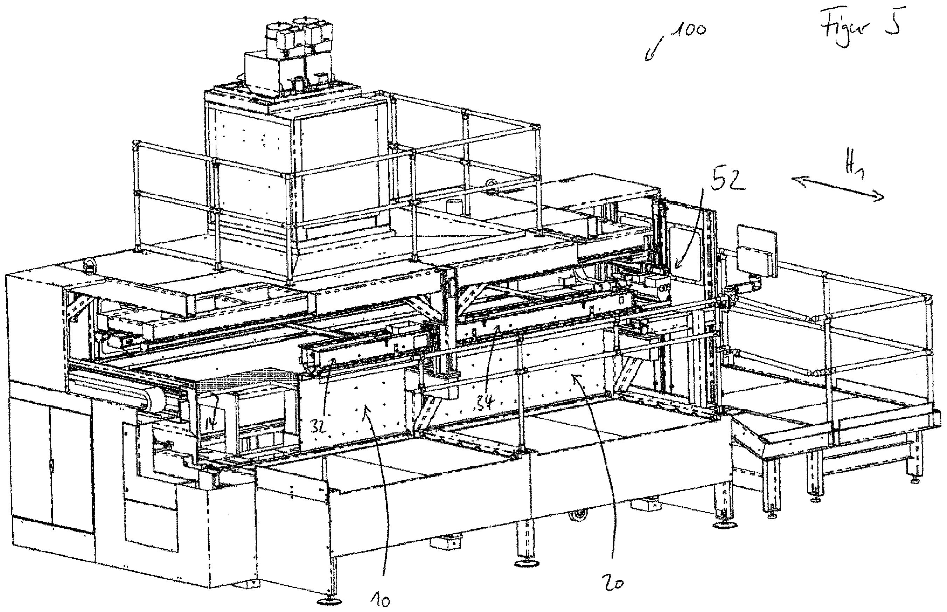

Wie in Figur 4 gezeigt, kann/können dabei in dem generativen Fertigungsverfahren:
der erste Bauraum B1 über einer ersten Bauplattform 14 und der zweite Bauraum B2 über einer zweiten Bauplattform 24 angeordnet sein und/oder
der erste Bauraum B1 von einer ersten Baubox 10 und der zweite Bauraum B2 von einer zweiten Baubox 20 definiert werden und/oder
der erste und der zweite Bauraum B1, B2 in der Draufsicht jeweils zwei lange und zwei kurze Seiten haben,
jeder Bauraum von einem separaten Beschichter 32, 34 bedient werden (siehe auch Figur 5), wozu der jeweilige Beschichter seinen zugehörigen Bauraum zum Beispiel senkrecht zu dessen langen Seiten überfährt, und/oder
beide Bauräume von einem gemeinsamen Druckkopf 52 bedient werden, wozu der gemeinsame Druckkopf den ersten und den zweiten Bauraum zum Beispiel senkrecht zu deren kurzen Seiten überfährt, zum Beispiel in Mäanderform, zum Beispiel U-Form (dies wird unten im Detail beschrieben), und/oder
der erste Bauraum B1 und der zweite Bauraum B2 in einem gemeinsamen Gehäuse 80 untergebracht sind, und/oder
der erste Bauraum B1 und der zweite Bauraum B2 in einer gemeinsamen Rahmenstruktur 70 angeordnet sind und/oder
der erste Beschichter 32 und der zweite Beschichter 34 von einer gemeinsamen Beschichter-Beschickungseinheit 60 mit Baumaterial beschickt werden.

Der gemeinsame Druckkopf 52 kann zum Beispiel in einer ersten Horizontalebene verfahren werden, wohingegen die beiden Beschichter 32, 34 in einer zweiten Horizontalebene verfahren werden, die mit vertikalem Abstand zu der ersten Horizontalebene angeordnet ist und sich zum Beispiel unterhalb dieser befindet.

Zum Beispiel kann der Druckkopf 52 mit höherer Geschwindigkeit verfahren werden als der jeweilige Beschichter 32, 34.

Wie in **Figur 4** gezeigt, können bei dem generativen Fertigungsverfahren, wenn sich die beiden Bauboxen 10, 20 in ihrer jeweiligen Bauposition befinden, die beiden Bauplattformen 14 und 24 aus der in Figur 3 gezeigten Position um eine Schichtdicke abgesenkt werden. Der Druckkopf 52 ist in Figur 4 rechts vorne angeordnet, und die Beschichteranordnung 30 ist hinten angeordnet.

Wie in **Figur 5** gezeigt, kann als nächstes die Beschichteranordnung 30 in der Horizontalrichtung H₁ nach vorne gefahren werden, um mit dem ersten Beschichter 32 auf der ersten Bauplattform 14 eine erste Baumaterial-Schicht abzulegen und mit dem zweiten Beschichter 34 auf der zweiten Bauplattform 24 eine zweite Baumaterial-Schicht abzulegen. Die Dicke der Schicht ist dabei in Relation zu den übrigen Komponenten vergrößert wiedergegeben. Der Druckkopf 52 ist weiterhin rechts vorne angeordnet.

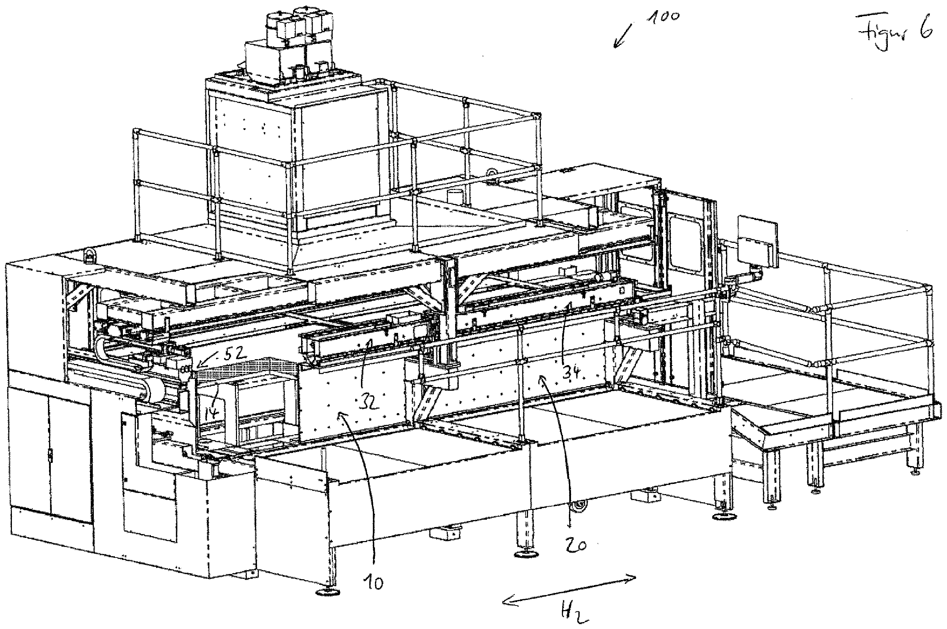

Wie in **Figur 6** gezeigt, kann als nächstes der Druckkopf 52 in der Horizontalrichtung H₂ nach links vorne gefahren werden, um einen vorderen Teilbereich (hier beispielgebend die vordere Hälfte) der zweiten Baumaterial-Schicht und einen vorderen Teilbereich (hier beispielgebend die vordere Hälfte) der ersten Baumaterial-Schicht nacheinander selektiv mit Behandlungsmittel zu versorgen bzw. zu bedrucken. Die Beschichteranordnung 30 verbleibt in ihrer in Figur 5 gezeigten Position.

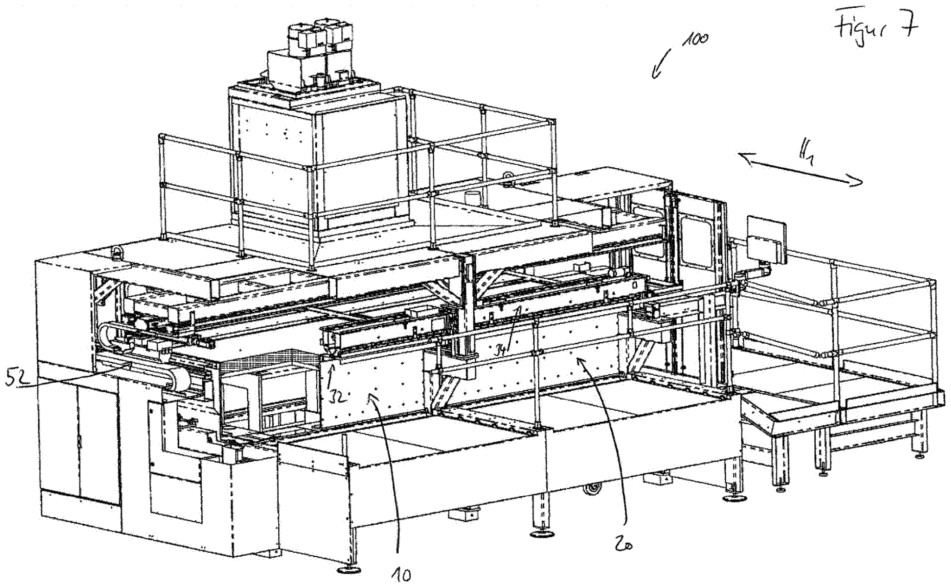

Wie in **Figur 7** gezeigt, kann als nächstes der Druckkopf 52 in der Horizontalrichtung H₁ nach links hinten gefahren werden, um den Druckkopf 52 für ein selektives Bedrucken des hinteren Teilbereichs der jeweiligen Baumaterial-Schicht auszurichten. Die Beschichteranordnung 30 verbleibt in ihrer in den Figur 5 und 6 gezeigten Position.

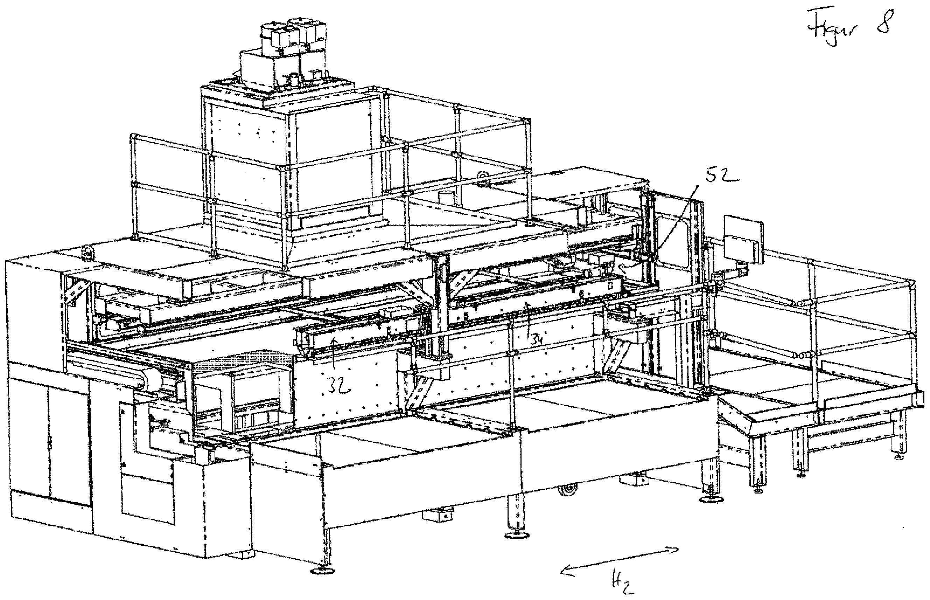

Wie in **Figur 8** gezeigt, kann als nächstes der Druckkopf 52 in der Horizontalrichtung H₂ nach rechts hinten gefahren werden, um den hinteren Teilbereich (hier beispielgebend die hintere Hälfte) der ersten Baumaterial-Schicht und einen hinteren Teilbereich (hier beispielgebend die hintere Hälfte) der zweiten Baumaterial-Schicht nacheinander selektiv mit Behandlungsmittel zu versorgen bzw. zu bedrucken. Die Beschichteranordnung 30 verbleibt weiterhin in ihrer in den Figur 5 bis 7 gezeigten Position.

Folglich ist in jedem Bauraum eine vollflächige Baumaterial-Schicht angeordnet, die selektiv mit Behandlungsmittel behandelt ist, wobei das Behandlungsmittel zu einer (unmittelbaren und/oder späteren) Verfestigung des Partikelmaterials in dem selektiv bedruckten Bereich beiträgt.

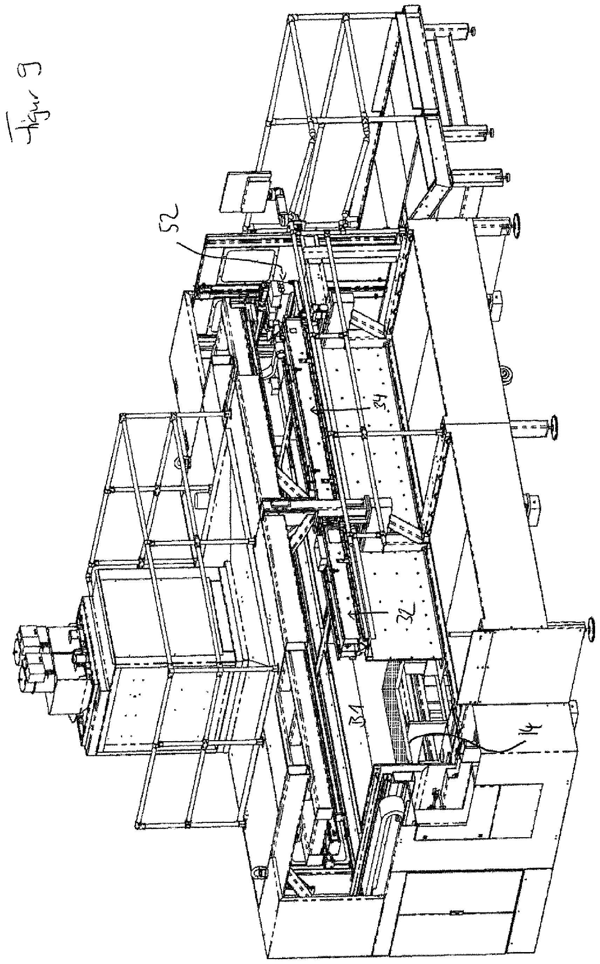

Wie in **Figur 9** gezeigt, können die beiden Bauplattformen 14 und 24 anschließend um eine weitere Schichtdicke abgesenkt werden. Die Beschichteranordnung 30 verbleibt weiterhin in der vorderen Position. Der Druckkopf 52 wurde von rechts hinten nach rechts vorne bewegt.

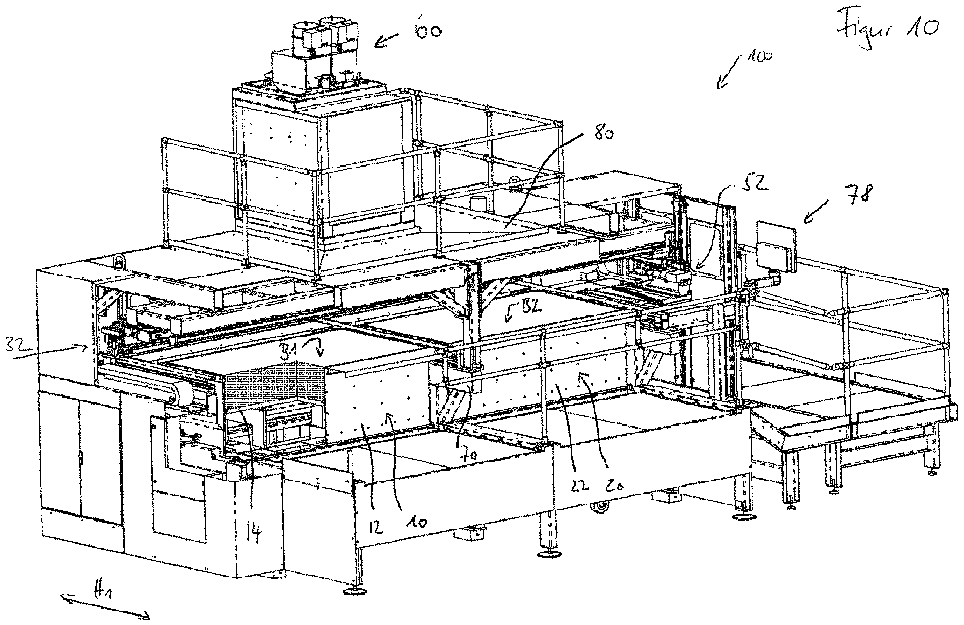

Wie in **Figur 10** gezeigt, kann als nächstes die Beschichteranordnung 30 in der Horizontalrichtung H₁ nach hinten gefahren werden, um mit dem ersten Beschichter 32 auf der ersten Bauplattform 14 eine weitere erste Baumaterial-Schicht abzulegen und um mit dem zweiten Beschichter 34 auf der zweiten Bauplattform 24 eine weitere zweite Baumaterial-Schicht abzulegen. Die Beschichteranordnung 30 ist also beispielgebend als bidirektionale Beschichteranordnung ausgebildet. Der Druckkopf 52 ist weiterhin rechts vorne angeordnet.

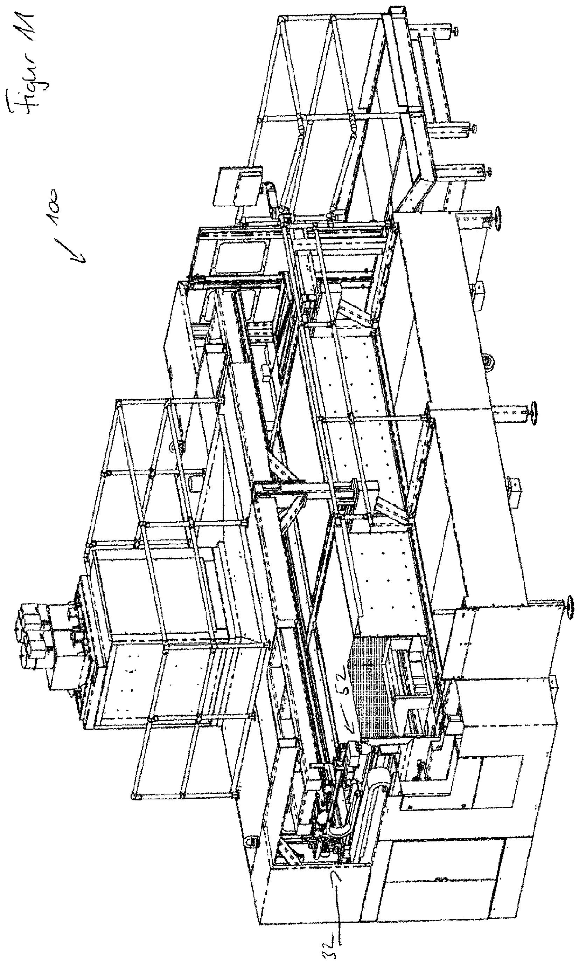

Wie in **Figur 11** gezeigt, kann als nächstes der Druckkopf 52 in der Horizontalrichtung H₂ nach links vorne gefahren werden, um einen vorderen Teilbereich (hier beispielgebend die vordere Hälfte) der weiteren zweiten Baumaterial-Schicht und einen vorderen Teilbereich (hier beispielgebend die vordere Hälfte) der weiteren ersten Baumaterial-Schicht nacheinander selektiv mit Behandlungsmittel zu versorgen bzw. zu bedrucken. Die Beschichteranordnung 30 verbleibt in ihrer hinteren Position.

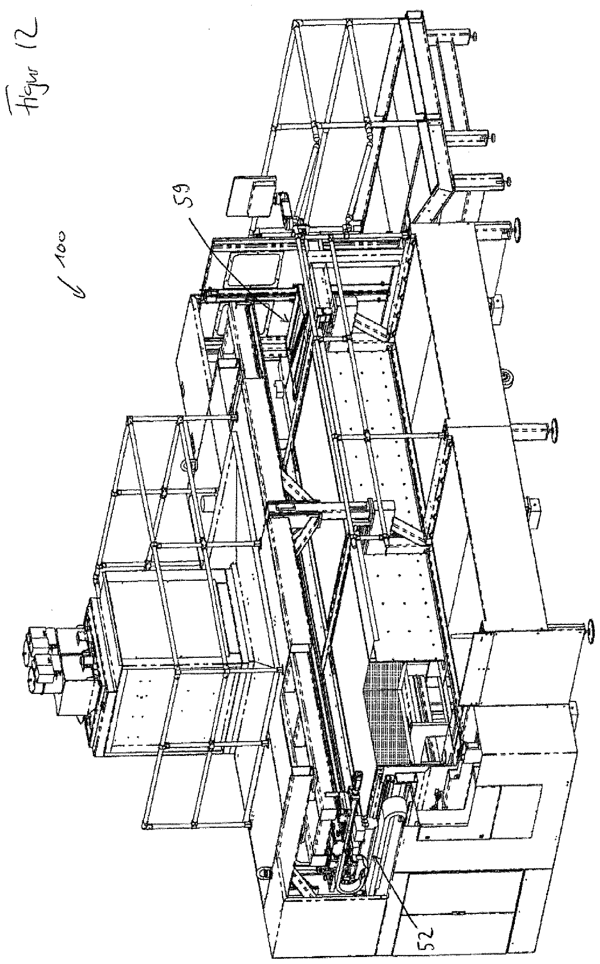

Wie in **Figur 12** gezeigt, kann als nächstes der Druckkopf 52 in der Horizontalrichtung H₁ nach links hinten gefahren werden, um den Druckkopf 52 für ein selektives Bedrucken des hinteren Teilbereichs der jeweiligen weiteren Baumaterial-Schicht auszurichten. Die Beschichteranordnung 30 verbleibt in ihrer hinteren Position. In Figur 12 ist mit dem Bezugszeichen 59 eine optionale Druckkopf-Reinigungsstation bezeichnet, in der der Druckkopf 52 vor einem Baujob und/oder nach einem Baujob und/oder während eines Baujobs (zum Beispiel während einer Beschichter-Fahrt) gereinigt werden kann.

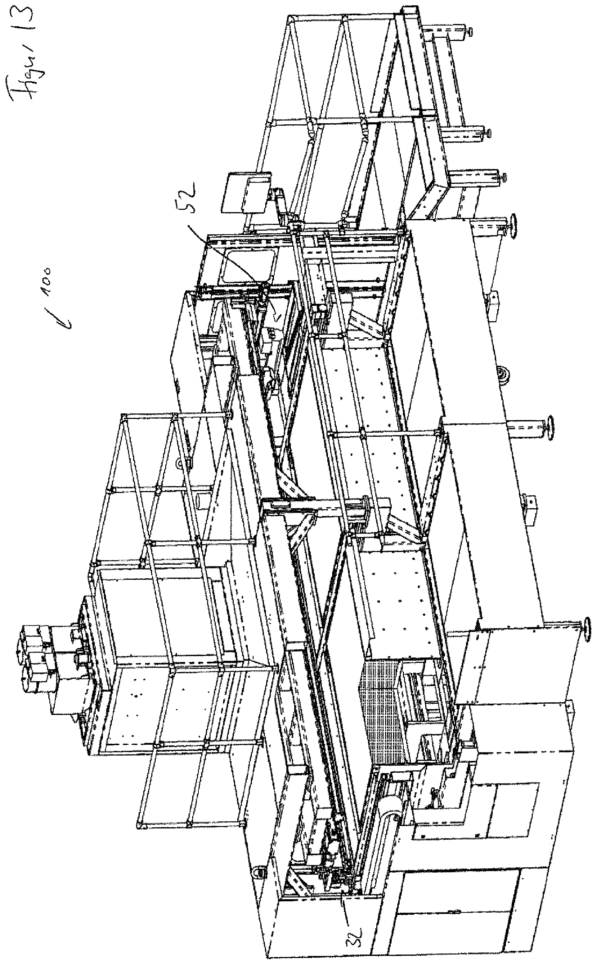

Wie in **Figur 13** gezeigt, kann als nächstes der Druckkopf 52 in der Horizontalrichtung H₂ nach rechts hinten gefahren werden, um den hinteren Teilbereich (hier beispielgebend die hintere Hälfte) der weiteren ersten Baumaterial-Schicht und einen hinteren Teilbereich (hier beispielgebend die hintere Hälfte) der weiteren zweiten Baumaterial-Schicht nacheinander selektiv mit Behandlungsmittel zu versorgen bzw. zu bedrucken. Die Beschichteranordnung 30 verbleibt in ihrer hinteren Position.

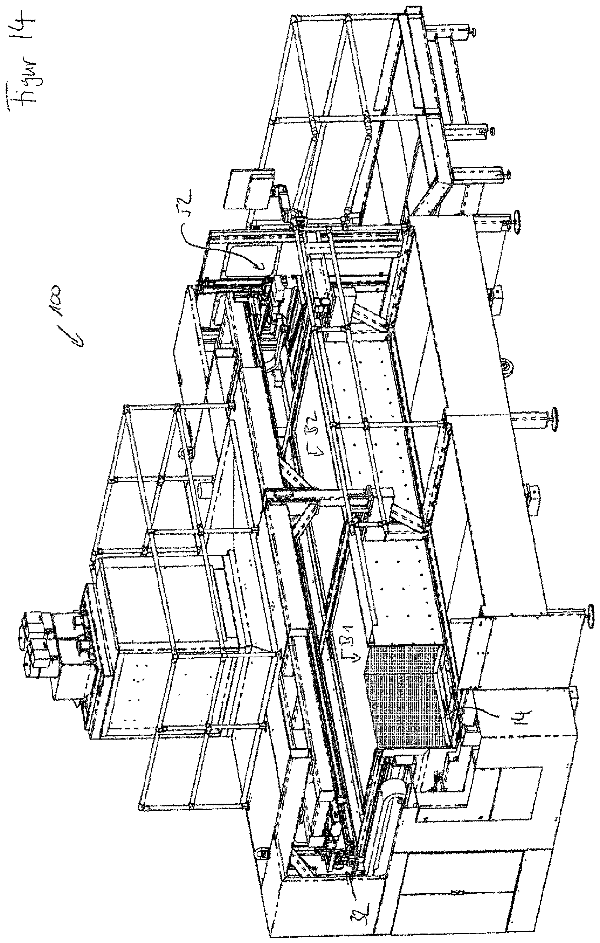

Wie in **Figur 14** gezeigt, können die oben genannten Schritte wiederholt werden, um in dem jeweiligen Bauraum einen Schichtstapel aus Partikelmaterial aufzubauen, der jeweils mindestens ein Bauteil aus verfestigtem Partikelmaterial (nicht gezeigt) enthält.

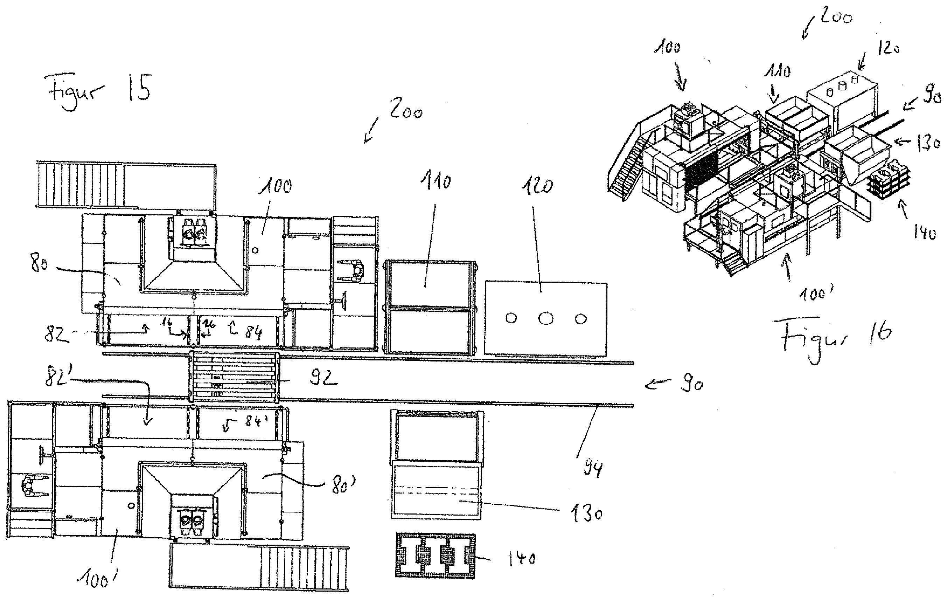

Die **Figuren 15 und 16** zeigen eine 3D-Druckeranorndung 200 gemäß einer Ausführungsform der Erfindung.

Wie in Figur 15 und 16 gezeigt, kann die 3D-Druckeranordnung 200 einen oder mehrere (hier beispielgebend zwei) erfindungsgemäße 3D-Drucker aufweisen, zum Beispiel einen oder mehrere 3D-Drucker 100 gemäß der ersten Ausführungsform und/oder einen oder mehrere 3D-Drucker 100 gemäß der zweiten Ausführungsform. Die 3D-Druckeranordnung 200 kann ferner zum Beispiel ein fahrerloses Transportsystem 90 zur automatischen Beschickung des 3D-Druckers 100 mit Bauboxen aufweisen. Das fahrerlose Transportsystem 90 kann zum Beispiel ein Schienensystem 94 aufweist, das sich außerhalb des 3D-Druckers 100 auf der Seite der ersten und der zweiten Baubox-Einführöffnung 82, 84 erstreckt und entlang dem eine jeweilige der ersten und der zweiten Baubox verfahrbar ist. Das fahrerlose Transportsystem 90 kann zum Beispiel ferner einen Transportwagen aufweisen, der entlang dem Schienensystem 94 verfahrbar ist und zumindest eine Baubox transportieren kann. Zum Beispiel kann eine erste Baubox mit dem Transportsystem 90 vor die erste Baubox-Einführöffnung 82 gefahren und dann mittels der ersten Rollenbahn 16 (oder einer alternativen Baubox-Zuführvorrichtung) in ihre Baubox-Bauposition innerhalb des 3D-Druckers verfahren werden, in welcher Position von der ersten Baubox eine erster Bauraum definiert werden. Analog kann eine zweite Baubox mit dem Transportsystem 90 vor die zweite Baubox-Einführöffnung 84 gefahren und dann mittels der zweiten Rollenbahn 26 (oder einer alternativen Baubox-Zuführvorrichtung) in ihre Baubox-Bauposition innerhalb des 3D-Druckers verfahren werden. In Figur 16 ist dabei ein Zustand gezeigt, in dem (nur) die erste Baubox in ihre Bauposition gefahren ist. Der beschriebene Baubox-Beschickungsprozess für die erste und zweite Baubox kann zum Beispiel vollautomatisch ablaufen.

Wie in den Figuren 15 und 16 gezeigt, können entlang des Transportsystems ein oder mehrere optionale Komponenten 110, 120, 130 vorgesehen sein, welche durch das fahrerlose Transportsystem mit dem 3D-Drucker 100 verbunden sind.

Die optionalen Komponenten können umfassen einen optionalen Baubox-Vorrat 110, in dem ein oder mehrere (hier beispielgebend zwei) Bauboxen vorgehalten werden, und/oder einen optionalen Mikrowellen-Ofen 120, in den eine Baubox hinein verfahren werden kann, um zum Beispiel die darin aufgenommenen, gefertigten Bauteile weiter auszuhärten, und/oder eine optionale Entpack-Station 130, wo ein Bauteil aus der das Bauteil enthaltenden Partikelmaterialschüttung aus nicht-verfestigtem Baumaterial entpackt werden kann (zum Beispiel automatisiert). Die entpackten Bauteile können zum Beispiel in einen optionalen Bauteil-Vorrat 140, zum Beispiel in der Form eines Regals, eingelagert werden.

Wie ferner in den Figuren 15 und 16 gezeigt, können in dem Fall, in dem die 3D-Druckeranordnung 200 einen ersten 3D-Drucker 100 und einen zweiten 3D-Drucker 100' aufweist, der erste und der zweite 3D-Drucker 100, 100' derart gegenüberliegend angeordnet sein, dass die erste und die zweite Baubox-Einführöffnung 82, 84 des ersten 3D-Druckers 100 und die erste und die zweite Baubox-Einführöffnung 82', 84' des zweiten 3D-Druckers 100' einander zugewandt sind und sich das fahrerlose Transportsystem 90 zwischen dem ersten und dem zweiten 3D-Drucker erstreckt, so dass der erste und der zweite 3D-Drucker über das fahrerlose Transportsystem mit jeweiligen Bauboxen beschickt werden können. Das fahrerlose Transportsystem 90 kann in diesem Fall als gemeinsames fahrerloses Transportsystem bezeichnet werden, das von beiden 3D-Druckern 100, 100' genutzt wird.

**Figur 17** zeigt eine mögliche Ausgestaltung einer Beschichteranordnung 30 zur Verwendung in einem erfindungsgemäßen 3D-Drucker. Die Beschichteranordnung 30 kann zum Beispiel in dem 3D-Drucker 100 gemäß der ersten Ausführungsform und/oder in dem 3D-Drucker 100 gemäß der zweiten Ausführungsform eingesetzt werden.

Wie in Figur 17 gezeigt, weist die Beschichteranordnung 30 einen ersten Beschichter 32 und einen davon separaten zweiten Beschichter 34 auf. Der erste Beschichter 32 kann einem ersten (nicht gezeigten) Bauraum zugeordnet sein, zum Beispiel dessen Längserstreckung überspannen, und der zweite Beschichter 34 kann einem zweiten (nicht gezeigten) Bauraum zugeordnet sein, zum Beispiel dessen Längserstreckung überspannen.

Die Beschichteranordnung 30 kann zum Beispiel derart in einem 3D-Drucker angeordnet werden, dass sie in einer ersten Horizontalrichtung über den ersten und den zweiten Bauraum hinweg verfahrbar ist, um den ersten und den zweiten Bauraum in Form einer jeweils gleichmäßigen Baumaterial-Schicht aus dem zu verfestigenden Baumaterial mit Baumaterial zu versorgen. Hierzu können der erste Beschichter 32 und der zweite Beschichter 34 parallel geführt sein, so dass sie parallel zueinander in der ersten Horizontalrichtung über ihren zugehörigen Baubereich hinweg verfahrbar sind. Grundsätzlich ist es möglich, dass der erste Beschichter 32 und der zweite Beschichter 34 unabhängig voneinander bewegt werden oder gemeinsam über das Baufeld hinweg bewegt werden. Letztere Alternative ist in Figur 17 verdeutlicht und wird unten im Detail beschrieben.

Der erste und der zweite Beschichter 32, 34 sind jeweils als sogenannter Behälter-Beschichter ausgebildet, d.h. sie weisen einen jeweiligen Behälter auf, der über einen zugehörigen Bauraum hinweg verfahrbar ist und einen inneren Hohlraum zur Aufnahme von partikelförmigem Baumaterial definiert, der in einer Öffnung zum Ausgeben des partikelförmigen Baumaterials auf das Baufeld bzw. den Bauraum mündet.

Der erste und der zweite Beschichter 32, 34 können wie gezeigt zum Beispiel langgestreckt ausgebildet sein. Mit anderen Worten können der erste und der zweite Beschichter 32, 34 als sogenannte Schlitz-Beschichter ausgebildet sein. Die Länge des (Ausgabe-)Schlitzes des jeweiligen Beschichters kann dabei größer gleich der zugehörigen Bauraumlänge sein.

Wie gezeigt, können der erste Beschichter 32 und der zweite Beschichter 34 zum Beispiel fest miteinander verbunden sein, zum Beispiel über eine gemeinsame Verbindungsplatte 36, so dass sie gemeinsam über den ersten Bauraum bzw. den zweiten Bauraum hinweg verfahrbar sind.

Die gemeinsame Verbindungsplatte 36 kann dabei zum Beispiel an einer (nicht gezeigten) Linearführungsstruktur befestigt sein/werden, zum Beispiel sich darauf abstützen, zum Beispiel auf einem Schlitten der Linearführungsstruktur. Die Linearführungsstruktur selbst kann zum Beispiel an einer (nicht gezeigten) Rahmenstruktur befestigt sein. An seinem freien Längsende kann der jeweilige Beschichter zum Beispiel an einer weiteren Linearführungsstruktur befestigt werden. Zum Beispiel kann der erste Beschichter 32 mit der Platte 37 an einer zweiten Linearführungsstruktur befestigt werden. Der zweite Beschichter 34 kann auf die gleiche Art und Weise an einer dritten Linearführungsstruktur befestigt werden.

**Figur 18** zeigt eine Querschnittsansicht durch einen Beschichter zur Verwendung in der Beschichteranordnung 30 aus Figur 17 bzw. zur Verwendung in einem erfindungsgemäßen 3D-Drucker, zum Beispiel in dem 3D-Drucker 100 gemäß der ersten Ausführungsform und/oder in dem 3D-Drucker 100 gemäß der zweiten Ausführungsform eingesetzt werden.

Der gezeigte Beschichter kann als der erste und/oder zweite Beschichter einer Beschichteranordnung verwendet werden, weshalb in Figur 18 die Bezugszeichen 32 und 34 angegeben wurden.

Wie gezeigt, kann der Beschichter 32, 34 einen Behälter 38 aufweisen, der einen inneren Hohlraum zur Aufnahme von partikelförmigem Baumaterial definiert, der in einer Öffnung zum Ausgeben des partikelförmigen Baumaterials mündet. Der Behälter 38 kann zum Beispiel an eine Trägerstruktur 48 angeschlossen bzw. an dieser befestigt sein.

Über dem Behälter 38 kann zum Beispiel ein sog. Vorlagebehälter 40 vorgesehen sein, der den (unteren) Behälter 38 mit partikelförmigem Baumaterial versorgt. In dem Vorlagebehälter 40 kann zum Beispiel eine Verteiler-Vorrichtung 42, hier beispielgebend in Form einer Schnecke, vorgesehen sein, die das dem Vorlagebehälter 40 zugeführte partikelförmige Baumaterial in dem Vorlagebehälter 40 verteilt. Der Vorlagebehälter selbst kann zum Beispiel über eine Beschichter-Beschickungsvorrichtung mit Baumaterial versorgt werden, zum Beispiel mit der Beschichter-Beschickungsvorrichtung 60 aus Figur 4. Hierzu kann der Beschichter zum Beispiel innerhalb eines 3D-Druckers in eine sog. Beschichter-Befüllungsposition verfahren werden, in der er von der Beschichter-Beschickungsvorrichtung mit Baumaterial versorgt wird.

An dem Beschichter 32, 34 kann zum Beispiel jeweils eine Schließvorrichtung 46 angebracht sein, die eingerichtet ist, um die Öffnung zum Ausgeben des partikelförmigen Baumaterials selektiv zu verschließen. Eine solche Schließvorrichtung kann zum Beispiel eine oder mehrere (hier beispielgebend zwei) langgestreckte Hohlkörper mit einem jeweiligen Expansionsabschnitt aufweisen, an dem der langgestreckte Hohlkörper durch Zuführen eines Druckfluids in den Hohlraum des Hohlkörpers expandierbar ist, wobei die Expansion des Hohlkörpers an dem Expandierabschnitt zu einem Schließen der Öffnung beiträgt. Der Expansionsabschnitt des jeweiligen Hohlkörpers ist in Figur 18 beispielgebend nach innen gewölbt, wobei in Figur 18 der geöffnete Zustand der Schließvorrichtung gezeigt ist, in dem die Öffnung des Behälters freigegeben ist. Durch Zuführen eines Druckfluids in den jeweiligen Hohlkörper verformen sich die beiden Expansionsabschnitte nach außen und aufeinander zu, um dadurch die Öffnung des Behälters zu verschließen/verdecken. Alternativ kann die Schließvorrichtung 46 zum Beispiel als Schiebervorrichtung ausgebildet sein.

Die Öffnung des Behälters eines jeweiligen Beschichters kann mittels der Schließvorrichtung zum Beispiel selektiv verschlossen werden (zum Beispiel gesteuert, d.h. von einer Steuereinheit), um bei einer Fahrt des Beschichters über den zugehörigen Baubereich ein Austreten von Partikelmaterial während einer Beschleunigungsstrecke/Beschleunigungsrampe vor dem Baubereich und/oder einer Abbremsstrecke nach dem Baubereich zu vermeiden und/oder um einen der Beschichter selektiv "abzuschalten" bzw. zu verschließen, wenn der dem diesen zugeordnete Baujob erledigt ist. In der in Figur 17 gezeigten Ausgestaltung der Beschichteranordnung 30 fährt der abgeschaltete Beschichter zwar noch mit dem aktiven Beschichter, dessen Baujob noch nicht erledigt ist, mit, jedoch wird ein Ausgeben von Partikelmaterial aus dem inaktiven Beschichter mit der Schließvorrichtung vermieden.

Wie ferner in Figur 18 gezeigt, können an dem Beschichter 32, 34 ein oder mehrere (hier beispielgebend zwei) Streichelemente 44 angebracht sein, die eingerichtet sind, um aus der Öffnung ausgegebenes partikelförmiges Baumaterial zu überstreichen, um dadurch das ausgegebene Partikelmaterial zu nivellieren und/oder zu verdichten. Die Anbringung von zwei Streichelementen 44 erlaubt es, den Beschichter als bidirektionalen Beschichter zu betreiben, der in beiden Richtungen (Hin- und Rückfahrt) gleichmäßige Schichten aus Baumaterial aufbringen kann. Das jeweilige Streichelement 44 kann zum Beispiel aus Metall, zum Beispiel aus Stahl, gefertigt sein und/oder eine langgestreckte Form haben und/oder als Klinge ausgebildet sein und/oder eine im Wesentlichen plane, untere Fläche aufweisen, mit der das ausgegebene Partikelmaterial nivelliert und/oder verdichtet werden kann.

Die vorhergehende Beschreibung von spezifischen beispielhaften Ausführungsformen wurde präsentiert zum Zwecke der Illustration und Beschreibung.

Der Schutzumfang wird durch die hieran angehängten Ansprüche definiert.

## Patentansprüche

1. 3D-Drucker (100),
der eingerichtet ist, um ein dreidimensionales Bauteil, z.B. eine Gussform oder einen Gießkern, schichtweise aufzubauen durch Ausbilden übereinander liegender Schichten von partikelförmigem Baumaterial, z.B. enthaltend Sandpartikel, und selektives Verfestigen eines Teilbereichs der jeweiligen Baumaterial-Schicht, und
der eingerichtet ist, um gleichzeitig in einem ersten Bauraum (B1), der in dem 3D-Drucker (100) angeordnet ist, ein oder mehrere erste dreidimensionale Bauteile und in einem zweiten Bauraum (B2), der benachbart zu dem ersten Bauraum (B1) mit horizontalem Abstand zu diesem in dem 3D-Drucker (100) angeordnet ist, ein oder mehrere zweite dreidimensionale Bauteile aufzubauen,
mit einer Beschichteranordnung (30), die in einer ersten Horizontalrichtung (H₁) über den ersten und den zweiten Bauraum (B1, B2) hinweg verfahrbar ist, um den ersten und den zweiten Bauraum (B1, B2) in Form einer jeweils gleichmäßigen Baumaterial-Schicht aus dem zu verfestigenden Baumaterial mit Baumaterial zu versorgen, und
mit einer gemeinsamen Druckvorrichtung (50), die in einer zweiten Horizontalrichtung (H₂), welche senkrecht ist zu der ersten Horizontalrichtung (H₁), über den ersten und den zweiten Bauraum (B1, B2) hinweg verfahrbar ist, um einen Teilbereich von einer zuvor aufgebrachten Baumaterial-Schicht des jeweiligen Bauraums durch gesteuertes Ausgeben eines fließfähigen Behandlungsmittels selektiv zu verfestigen,
wobei die gemeinsame Druckvorrichtung (50) einen gemeinsamen Druckkopf (52) mit ein oder mehreren Druckdüsen aufweist, der eingerichtet ist, um sowohl den ersten Bauraum (B1) als auch den zweiten Bauraum (B2) zu bedienen,
wobei der erste Bauraum (B1) und der zweite Bauraum (B2) in der Draufsicht zwei lange Seiten und zwei kurze Seiten haben, und wobei die erste Horizontalrichtung (H₁) senkrecht ist zu den langen Seiten und/oder parallel zu den kurzen Seiten.

2. 3D-Drucker (100) nach Anspruch 1,
wobei die Beschichteranordnung (30) als bidirektionale Beschichteranordnung (30) ausgebildet ist und/oder
wobei die Druckvorrichtung (50), zum Beispiel deren Druckkopf (52), neben der zweiten Horizontalrichtung zusätzlich in der ersten Horizontalrichtung (H₁) verfahrbar bzw. versetzbar ist, so dass die Druckvorrichtung (50), zum Beispiel deren Druckkopf (52), insgesamt mäanderförmig, zum Beispiel U-förmig, über die beiden Bauräume (B1, B2) verfahrbar ist
und/oder
wobei der erste und der zweite Bauraum (B1, B2) entlang einer jeweiligen kurzen Seite benachbart zueinander angeordnet sind, und/oder
wobei die zweite Horizontalrichtung (H₂) senkrecht ist zu den kurzen Seiten und/oder parallel ist zu den langen Seiten.

3. 3D-Drucker (100) nach Anspruch 1 oder 2,
mit einer ersten Bauplattform (14) und einer zweiten Bauplattform (24),
wobei der 3D-Drucker (100) eingerichtet ist, um die erste Bauplattform (14) und die zweite Bauplattform (24) gleichzeitig in einer jeweils zugehörigen, voneinander separaten ersten bzw. zweiten Bauplattform-Bauposition aufzunehmen, in welcher die jeweilige Bauplattform (14, 24) innerhalb des 3D-Druckers (100) angeordnet ist und in welcher über der ersten Bauplattform (14) der erste Bauraum (B1) und über der zweiten Bauplattform (24) der zweite Bauraum (B2) angeordnet ist, und/oder
mit einer ersten Baubox (10) und einer zweiten Baubox (20),
wobei der 3D-Drucker (100) eingerichtet ist, um die erste Baubox (10) und die zweite Baubox (20) gleichzeitig in einer jeweils zugehörigen, voneinander separaten ersten bzw. zweiten Baubox-Bauposition aufzunehmen, in welcher die jeweilige Baubox (10, 20) zum Aufbauen des jeweils mindestens einen Bauteils mittels des 3D-Druckers (100) in dem von der ersten und der zweiten Baubox (10, 20) definierten ersten bzw. zweiten Bauraum (B1, B2) innerhalb des 3D-Druckers (100) angeordnet ist so dass mit dem 3D-Drucker (100) zeitgleich in der ersten Baubox (10) und der zweiten Baubox (20) jeweils ein oder mehrere Bauteile schichtweise aufbaubar sind.

4. 3D-Drucker (100) nach Anspruch 3, wobei die erste Baubox (10) und/oder die zweite Baubox (20) eine sich in vertikaler Richtung erstreckende Umfangswandstruktur (12, 22) aufweisen, die einen jeweiligen Bauboxinnenraum begrenzt, wobei zum Beispiel in dem jeweiligen Bauboxinnenraum eine sich in horizontaler Richtung erstreckende erste bzw. zweite Bauplattform (14, 24) aufgenommen ist.

5. 3D-Drucker (100) nach Anspruch 3 oder 4, wobei die erste Bauplattform (14) und/oder die zweite Bauplattform (24) höhenverstellbar sind, so dass die jeweilige Bauplattform (14, 24) zum Aufbauen eines Bauteils schrittweise absenkbar ist

6. 3D-Drucker (100) nach einem der Ansprüche 1 bis 5, wobei jede kurze Seite des ersten Bauraums (B1) und/oder des zweiten Bauraums (B2) eine Abmessung von kleiner gleich 2m hat, zum Beispiel von kleiner gleich 1,8m, zum Beispiel von kleiner gleich 1,6m.

7. 3D-Drucker (100) nach einem der Ansprüche 3 bis 6, wobei die erste und/oder die zweite Bauplattform (14, 24) bzw. Baubox (10, 20) zwischen ihrer jeweiligen Bauposition und einer zusätzlichen Position, in der die jeweilige Bauplattform (14, 24) bzw. Baubox (10, 20) außerhalb des 3D-Druckers (100) angeordnet ist, verfahrbar sind.

8. 3D-Drucker (100) nach einem der vorangehenden Ansprüche, wobei die Beschichteranordnung (30) einen ersten Beschichter (32), der dem ersten Bauraum (B1) zugeordnet ist, und einen davon separaten zweiten Beschichter (34) aufweist, der dem zweiten Bauraum (B2) zugeordnet ist, und wobei optional:
der erste Beschichter (32) und/oder der zweite Beschichter (34) jeweils einen Behälter (38) aufweisen, der einen inneren Hohlraum zur Aufnahme von partikelförmigem Baumaterial definiert, der in einer Öffnung zum Ausgeben des partikelförmigen Baumaterials mündet, wobei zum Beispiel an dem ersten Beschichter (32) und/oder dem zweiten Beschichter (34) jeweils eine Schließvorrichtung (46) angebracht ist, die eingerichtet ist, um die Öffnung zum Ausgeben des partikelförmigen Baumaterials selektiv zu verschließen, und/oder wobei zum Beispiel an dem ersten Beschichter (32) und/oder dem zweiten Beschichter (34) jeweils ein Streichelement (44) angebracht ist, das eingerichtet ist, um aus der Öffnung ausgegebenes partikelförmiges Baumaterial zu überstreichen, um dadurch das ausgegebene Partikelmaterial zu nivellieren und/oder zu verdichten, und/oder
der erste Beschichter (32) und der zweite Beschichter (34) fest miteinander verbunden sind, so dass sie gemeinsam über den ersten Bauraum (B1) bzw. den zweiten Bauraum (B2) hinweg verfahrbar sind.

9. 3D-Drucker (100) nach einem der Ansprüche 2 bis 8, wobei der gemeinsame Druckkopf (52)
einen von den Druckdüsen gebildeten Behandlungsmittel-Ausgabebereich hat, dessen Abmessung einem Abschnitt, zum Beispiel im Wesentlichen der Hälfte, oder der gesamten Länge/Abmessung einer jeweiligen kurzen Seite entspricht, und/oder
in vertikaler Richtung mit Abstand zu dem ersten Beschichter (32) und dem zweiten Beschichter (34) angeordnet ist und in einer separaten Horizontalebene horizontal verfahrbar ist.

10. 3D-Drucker (100) nach einem der Ansprüche 2 bis 9, ferner mit einer in den 3D-Drucker (100) integrierten, gemeinsamen Beschichter-Beschickungseinheit (60)
die in vertikaler Richtung oberhalb des ersten und des zweiten Beschichters (32, 34) angeordnet ist und/oder
mit der sowohl der erste als auch der zweite Beschichter (32, 34) mit Baumaterial versorgbar ist, zum Beispiel über eine mehrgeteilte, zum Beispiel zweigeteilte, und/oder sich verzweigende Zuführstruktur, und/oder
die eine gemeinsame Mischeinheit aufweist, zum Beispiel aufweisend einen gemeinsamen Mischbehälter mit Rührwerk, wobei in dem Mischbehälter zubereitetes Baumaterial über eine mehrgeteilte, zum Beispiel zweigeteilte, und/oder sich verzweigende Zuführstruktur in den ersten und den zweiten Beschichter (32, 34) einspeisbar ist, wenn diese in eine jeweilige Befüllungsposition verfahren sind.

11. 3D-Drucker (100) nach einem der vorangehenden Ansprüche, mit
einer gemeinsamen Rahmenstruktur (70), in der sowohl der erste Bauraum (B1) als auch der zweite Bauraum (B2) angeordnet sind, und/oder
einem gemeinsamen Gehäuse (80), in dem sowohl der erste Bauraum (B1) als auch der zweite Bauraum (B2) angeordnet sind.

12. 3D-Drucker (100) nach einem der vorangehenden Ansprüche, wobei der 3D-Drucker eine erste und eine zweite Baubox-Einführöffnung (82, 84) aufweist, die zum Beispiel auf einer gemeinsamen Seite des 3D-Druckers (100) vorgesehen sind

13. 3D-Druckeranordnung (200), mit
einem 3D-Drucker (100) nach einem der Ansprüche 1 bis 12 und
einem fahrerlosen Transportsystem (90) zur automatischen Beschickung des 3D-Druckers (100) mit Bauboxen (10, 20),
wobei das fahrerlose Transportsystem (90) zum Beispiel ein Schienensystem (94) aufweist, das sich außerhalb des 3D-Druckers (100) auf der Seite der ersten und der zweiten Baubox-Einführöffnung (82, 84) aus Anspruch 12 erstreckt und entlang dem eine jeweilige der ersten und der zweiten Baubox (10, 20) verfahrbar ist.

14. 3D-Druckeranorndung (200) nach Anspruch 13, mit
einem ersten und einem zweiten 3D-Drucker (100, 100') nach Anspruch 12,
wobei der erste und der zweite 3D-Drucker (100, 100') derart gegenüberliegend angeordnet sind, dass die erste und die zweite Baubox-Einführöffnung (82, 84) des ersten 3D-Druckers (100) und die erste und die zweite Baubox-Einführöffnung (82', 84') des zweiten 3D-Druckers (100') einander zugewandt sind und sich das fahrerlose Transportsystem (90), zum Beispiel dessen Schienensystem (94), zwischen dem ersten und dem zweiten 3D-Drucker (100, 100') erstreckt, so dass der erste und der zweite 3D-Drucker (100, 100') über das gemeinsame, fahrerlose Transportsystem (90), zum Beispiel dessen Schienensystem (94), mit jeweiligen Bauboxen (10, 20) beschickt werden können.

15. Generatives Fertigungsverfahren, bei dem in einem ersten Bauraum (B1) und einem zu dem ersten Bauraum (B1) benachbart angeordneten, zweiten Bauraum (B2) eines gemeinsamen 3D-Druckers (100) nach einem der Ansprüche 1 bis 12 gleichzeitig jeweils ein oder mehrere dreidimensionale Bauteile, z.B. eine Gussform oder ein Gießkern, in einem jeweiligen Baujob schichtweise aufgebaut werden, insbesondere durch Ausbilden übereinander liegender Schichten von partikelförmigem Baumaterial, z.B. enthaltend Sandpartikel, und selektives Verfestigen eines Teilbereichs der jeweiligen Baumaterial-Schicht in dem jeweiligen Bauraum (B1, B2), wobei optional:
der erste Bauraum (B1) über einer ersten Bauplattform (14) und der zweite Bauraum (B2) über einer zweiten Bauplattform (24) angeordnet sind und/oder
der erste Bauraum (B1) von einer ersten Baubox (10) und der zweite Bauraum (B2) von einer zweiten Baubox (20) definiert werden und/oder
beide Bauräume (B1, B2) von einem gemeinsamen Druckkopf (52) bedient werden, wozu der gemeinsame Druckkopf (52) den ersten und den zweiten Bauraum (B1, B2) zum Beispiel senkrecht zu deren kurzen Seiten, zum Beispiel in Mäanderform, zum Beispiel U-Form, überfährt und/oder
der gemeinsame Druckkopf (52) in einer ersten Horizontalebene und die beiden Beschichter (32, 34) in einer zweiten Horizontalebene verfahren werden, die mit vertikalem Abstand zu der ersten Horizontalebene angeordnet ist und sich zum Beispiel unterhalb dieser befindet, und/oder
der Druckkopf (52) mit höherer Geschwindigkeit verfahren wird als der jeweilige Beschichter (32, 34) und/oder
der erste Bauraum (B1) und der zweite Bauraum (B2) in einem gemeinsamen Gehäuse (80) untergebracht sind, und/oder
der erste Bauraum (B1) und der zweite Bauraum (B2) in einer gemeinsamen Rahmenstruktur (70) angeordnet sind und/oder
der erste Beschichter (32) und der zweite Beschichter (34) von einer gemeinsamen Beschichter-Beschickungseinheit (60) mit Baumaterial beschickt werden.

## Claims

1. 3D printer (100),
which is configured to build up a three-dimensional component, for example a casting mold or a foundry core, in layers by forming layers of particulate construction material, for example containing sand particles, lying one upon the other and by selectively solidifying a partial region of the respective construction material layer, and
which is configured to build up one or more first three-dimensional components in a first construction space (B1) which is arranged in the 3D printer (100), and simultaneously one or more second three-dimensional components in a second construction space (B2) which is arranged adjacent to the first construction space (B1) at a horizontal distance therefrom in the 3D printer (100),
having a coating device arrangement (30) which is displaceable across the first and the second construction space (B1, B2) in a first horizontal direction (H₁), to supply the first and the second construction space (B1, B2) with construction material in the form of a respectively uniform construction material layer of the construction material to be solidified, and
with a common printing device (50) which is displaceable across the first and the second construction space (B1, B2) in a second horizontal direction (H₂), which is perpendicular to the first horizontal direction (H₁), to selectively solidify a partial region of a previously applied construction material layer of the respective construction space by a controlled output of a flowable treatment agent,
wherein the common printing device (50) comprises a common printing head (52) having one or more printing nozzles, which is configured to serve both the first construction space (B1) and the second construction space (B2),
wherein the first construction space (B1) and the second construction space (B2) have two long sides and two short sides in top view, and wherein the first horizontal direction (H₁) is perpendicular to the long sides and/or parallel to the short sides.

2. 3D printer (100) according to claim 1,
wherein the coating device arrangement (30) is configured as a bidirectional coating device arrangement (30), and/or
wherein the printing device (50), for example the print head (52) thereof, is movable and/or displaceable besides the second horizontal direction additionally in the first horizontal direction (H₁), so that the printing device (50), for example the print head (52) thereof, is movable in an altogether meandering pattern, for example in a U-shape, across the two construction spaces (B1, B2), and/or
wherein the first and the second construction space (B1, B2) are arranged adjacent to each other along a respective short side, and/or
wherein the second horizontal direction (H₂) is perpendicular to the short sides and/or parallel to the long sides.

3. 3D printer (100) according to claim 1 or 2,
having a first construction platform (14) and a second construction platform (24),
wherein the 3D printer (100) is configured to receive the first construction platform (14) and the second construction platform (24) simultaneously in a respectively associated first and second construction platform construction position, respectively, which are separate from each other, in which the respective construction platform (14, 24) is arranged within the 3D printer (100) and in which the first construction space (B1) is arranged above the first construction platform (14) and the second construction space (B2) is arranged above the second construction platform (24), and/or
having a first construction box (10) and a second construction box (20),
wherein the 3D printer (100) is configured to receive the first construction box (10) and the second construction box (20) simultaneously in a respectively associated first and second construction box construction position, respectively, which are separate from each other, in which the respective construction box (10, 20) is arranged within the 3D printer (100) for building up the respectively at least one component by means of the 3D printer (100) in the first and the second construction space (B1, B2), respectively, defined by the first and the second construction box (10, 20),
so that respectively one or more components may be built up in layers simultaneously in the first construction box (10) and the second construction box (20) using the 3D printer (100).

4. 3D printer (100) according to claim 3, wherein the first construction box (10) and/or the second construction box (20) comprise a peripheral wall structure (12, 22) extending in a vertical direction, which delimits a respective construction box interior space, wherein, for example, a first and a second construction platform (14, 24), respectively, extending in a horizontal direction, is received in the respective construction box interior space.

5. 3D printer (100) according to claim 3 or 4, wherein the first construction platform (14) and/or the second construction platform (24) are height-adjustable, so that the respective construction platform (14, 24) may be lowered gradually for building up a component.

6. 3D printer (100) according to any one of claims 1 to 5, wherein each short side of the first construction space (B1) and/or of the second construction space (B2) has a dimension of less than or equal to 2 m, for example of less than or equal to 1.8 m, for example of less than or equal to 1.6 m.

7. 3D printer (100) according to any one of claims 3 to 6, wherein the first and/or the second construction platform (14, 24) and construction box (10, 20), respectively, are displaceable between their respective construction position and an additional position in which the respective construction platform (14, 24) or construction box (10, 20) is arranged outside the 3D printer (100).

8. 3D printer (100) according to any one of the preceding claims, wherein the coating device arrangement (30) comprises a first coating device (32), which is assigned to the first construction space (B1), and a second coating device (34) separate therefrom, which is assigned to the second construction space (B2), and wherein optionally:
the first coating device (32) and/or the second coating device (34) respectively comprise a container (38) which defines an inner cavity for receiving particulate construction material, which leads to an opening for outputting the particulate construction material, wherein for example a closing device (46) is respectively attached to the first coating device (32) and/or the second coating device (34), which is configured to selectively close the opening for outputting the particulate construction material, and/or wherein for example a stroking member (44) is respectively attached to the first coating device (32) and/or the second coating device (34), which is configured to stroke particulate construction material outputted from the opening, to thereby level and/or compress the output particulate material, and/or
the first coating device (32) and the second coating device (34) are connected to each other in a fixed way, to be displaceable together across the first construction space (B1) and the second construction space (B2), respectively.

9. 3D printer (100) according to any one of claims 2 to 8, wherein the common printing head (52)
has a treatment agent output area formed by the printing nozzles, a dimension of which corresponds to a portion, for example substantially half of, or the entire length / dimension of a respective short side, and/or
is arranged in a vertical direction at a distance from the first coating device (32) and the second coating device (34) and is displaceable horizontally in a separate horizontal plane.

10. 3D printer (100) according to any one of the preceding claims,
further having a common coating device feeding unit (60) integrated in the 3D printer (100),
which is arranged in a vertical direction above the first and the second coating device (32, 34), and/or
by which both the first and the second coating device (32, 34) can be supplied with construction material, for example by a feeding structure split in several parts, for example split in two, and/or branched, and/or
comprising a common mixing unit, for example comprising a common mixing container having an agitator, wherein construction material prepared in the mixing container can be fed to the first and the second coating device (32, 34) by a feeding structure split in several parts, for example split in two, and/or branched, if they are moved into a respective filling position.

11. 3D printer (100) according to any one of the preceding claims, having
a common frame structure (70) in which both the first construction space (B1) and the second construction space (B2) are arranged, and/or
a common housing (80) in which both the first construction space (B1) and the second construction space (B2) are arranged.

12. 3D printer (100) according to any one of the preceding claims, wherein the 3D printer comprises a first and a second construction box insertion opening (82, 83) which are for example provided on a common side of the 3D printer (100).

13. 3D printer arrangement (200), having
a 3D printer (100) according to any one of claims 1 to 12, and
a driverless transport system (90) for automatically charging the 3D printer (100) with construction boxes (10, 20),
wherein the driverless transport system (90) comprises, for example, a rail system (94) extending outside the 3D printer (100) on the side of the first and the second construction box insertion opening (82, 84) according to claim 12, and along which a respective one of the first and the second construction box (10, 20) is displaceable.

14. 3D printer arrangement (200) according to claim 13, having
a first and a second 3D printer (100, 100') according to claim 12,
wherein the first and the second 3D printer (100, 100') are arranged on opposite sides in such a way that the first and the second construction box insertion opening (82, 84) of the first 3D printer (100) and the first and the second construction box insertion opening (82', 84') of the second 3D printer (100') face each other and the driverless transport system (90), for example a rail system (94) thereof, extends between the first and the second 3D printer (100, 100'), so that the first and the second 3D printer (100, 100') can be charged with respective construction boxes (10, 20) by the common driverless transport system (90), for example the rail system (94) thereof.

15. Generative manufacturing process, where one or more three-dimensional components, for example a casting mold or a foundry core, are respectively built up in layers in a respective construction job simultaneously in a first construction space (B1) and a second construction space (B2), arranged adjacent to the first construction space (B1), of a common 3D printer (100) according to any one of claims 1 to 12, in particular by forming layers of particulate construction material, for example containing sand particles, lying one upon the other, and selectively solidifying a partial region of the respective construction material layer in the respective construction space (B1, B2), wherein optionally:
the first construction space (B1) is arranged above a first construction platform (14) and the second construction space (B2) is arranged above a second construction platform (24), and/or
the first construction space (B1) is defined by a first construction box (10) and the second construction space (B2) is defined by a second construction box (20), and/or
both construction spaces (10, 20) are served by a common printing head (52), wherefore the common printing head (52) travels across the first and the second construction space (B1, B2), for example perpendicular to their short sides, for example in a meandering pattern, for example in a U-shape, and/or
the common printing head (52) is displaced in a first horizontal plane and both coating devices (32, 34) are displaced in a second horizontal plane which is arranged at a vertical distance from the first horizontal plane and is located, for example, underneath the same, and/or
the printing head (52) is displaced at a higher speed than the respective coating device (32, 34), and/or
the first construction space (B1) and the second construction space (B2) are accommodated in a common housing (80), and/or
the first construction space (B1) and the second construction space (B2) are arranged in a common frame structure (70), and/or
the first coating device (32) and the second coating device (34) are charged with construction material by a common coating device feeding unit (60).

## Revendications

1. Imprimante 3D (100),
qui est conçue pour construire par couches un composant tridimensionnel, par exemple un moule ou un noyau de coulée, par formation de couches superposées de matériau de construction particulaire, par exemple contenant des particules de sable, et solidification sélective d'une zone partielle de la couche de matériau de construction respective, et
qui est conçue pour imprimer simultanément dans un premier espace de construction (B1), qui est disposé dans l'imprimante 3D (100), un ou plusieurs premiers composants tridimensionnels et dans un deuxième espace de construction (B2), qui est disposé de manière adjacente au premier espace de construction (B1) à distance horizontale de celui-ci dans l'imprimante 3D (100), un ou plusieurs deuxièmes composants tridimensionnels,
avec un ensemble de coucheuses (30), qui peut être déplacé dans une première direction horizontale (H₁) au-delà du premier et du deuxième espace de construction (B1, B2) pour alimenter en matériau de construction le premier et le deuxième espace de construction (B1, B2) sous la forme d'une couche de matériau de construction respectivement uniforme à partir du matériau de construction à solidifier, et
avec un dispositif d'impression (50) commun, qui, dans une deuxième direction horizontale (H₂), laquelle est perpendiculaire à la première direction horizontale (H₁), peut être déplacé au-delà du premier et du deuxième espace de construction (B1, B2), afin de solidifier sélectivement une zone partielle d'une couche de matériau de construction précédemment appliquée de l'espace de construction respectif par distribution commandée d'un agent de traitement fluide,
dans laquelle le dispositif d'impression (50) commun présente une tête d'impression (52) commune avec une ou plusieurs buses d'impression, qui est conçue pour desservir à la fois le premier espace de construction (B1) et le deuxième espace de construction (B2),
dans laquelle le premier espace de construction (B1) et le deuxième espace de construction (B2) ont deux côtés longs et deux côtés courts en vue de dessus, et dans laquelle la première direction horizontale (H₁) est perpendiculaire aux côtés longs et/ou parallèle aux côtés courts.

2. Imprimante 3D (100) selon la revendication 1,
dans laquelle l'ensemble de coucheuses (30) est réalisé sous la forme d'un ensemble de coucheuses (30) bidirectionnel et/ou
dans laquelle le dispositif d'impression (50), par exemple la tête d'impression (52) de celui-ci, peut être déplacé ou amené en plus de la deuxième direction horizontale dans la première direction horizontale (H₁), de sorte que le dispositif d'impression (50), par exemple la tête d'impression (52) de celui-ci, peut être déplacé globalement en forme de méandres, par exemple en forme de U, sur les deux espaces de construction (B1, B2), et/ou
dans laquelle le premier et le deuxième espace de construction (B1, B2) sont disposés de manière adjacente l'un à l'autre le long d'un côté court respectif, et/ou
dans laquelle la deuxième direction horizontale (H₂) est perpendiculaire aux côtés courts et/ou parallèle aux côtés longs.

3. Imprimante 3D (100) selon la revendication 1 ou 2,
avec une première plate-forme de construction (14) et une deuxième plate-forme de construction (24),
dans laquelle l'imprimante 3D (100) est conçue pour recevoir la première plate-forme de construction (14) et la deuxième plate-forme de construction (24) simultanément dans une première ou deuxième position de construction de plate-forme de construction respectivement associée, séparées l'une de l'autre, dans laquelle la plate-forme de construction (14, 24) respective est disposée à l'intérieur de l'imprimante 3D (100) et dans laquelle le premier espace de construction (B1) est disposé au-dessus de la première plate-forme de construction (14) et le deuxième espace de construction (B2) au-dessus de la deuxième plate-forme de construction (24), et/ou
avec une première boîte de construction (10) et une deuxième boîte de construction (20),
dans laquelle l'imprimante 3D (100) est conçue pour recevoir la première boîte de construction (10) et la deuxième boîte de construction (20) simultanément dans une première ou deuxième position de construction de boîte de construction respectivement associée, séparées l'une de l'autre, dans laquelle la boîte de construction (10, 20) respective pour la construction de l'au moins un composant respectif au moyen de l'imprimante 3D (100) est disposée dans le premier ou deuxième espace de construction (B1, B2) défini par la première et la deuxième boîte de construction (10, 20) à l'intérieur de l'imprimante 3D (100),
de sorte qu'avec l'imprimante 3D (100), respectivement un ou plusieurs composants peuvent être construits par couches simultanément dans la première boîte de construction (10) et la deuxième boîte de construction (20).

4. Imprimante 3D (100) selon la revendication 3, dans laquelle la première boîte de construction (10) et/ou la deuxième boîte de construction (20) présente une structure de paroi périphérique (12, 22) s'étendant dans une direction verticale, qui délimite un espace intérieur de boîte de construction respectif, dans laquelle, par exemple, une première ou deuxième plate-forme de construction (14, 24) s'étendant dans une direction horizontale est reçue dans l'espace intérieur de boîte de construction respectif.

5. Imprimante 3D (100) selon la revendication 3 ou 4, dans laquelle la première plateforme de construction (14) et/ou la deuxième plateforme de construction (24) sont réglables en hauteur, de sorte que la plateforme de construction (14, 24) respective peut être abaissée pas à pas pour la construction d'un composant.

6. Imprimante 3D (100) selon l'une quelconque des revendications 1 à 5, dans laquelle chaque côté court du premier espace de construction (B1) et/ou du deuxième espace de construction (B2) a une dimension inférieure ou égale à 2 m, par exemple inférieure ou égale à 1,8 m, par exemple inférieure ou égale à 1,6 m.

7. Imprimante 3D (100) selon l'une quelconque des revendications 3 à 6, dans laquelle la première et/ou la deuxième plateforme de construction (14, 24) ou boîte de construction (10, 20) peuvent être déplacées entre leur position de construction respective et une position supplémentaire, dans laquelle la plateforme de construction (14, 24) ou boîte de construction (10, 20) respective est disposée à l'extérieur de l'imprimante 3D (100).

8. Imprimante 3D (100) selon l'une quelconque des revendications précédentes, dans laquelle l'ensemble de coucheuses (30) présente une première coucheuse (32), qui est associée au premier espace de construction (B1), et une deuxième coucheuse (34) séparée de celle-ci, qui est associée au deuxième espace de construction (B2), et dans laquelle, éventuellement :
la première coucheuse (32) et/ou la deuxième coucheuse (34) présentent chacun un récipient (38), qui définit une cavité intérieure pour recevoir le matériau de construction particulaire, qui débouche dans une ouverture pour distribuer le matériau de construction particulaire, dans laquelle respectivement un dispositif de fermeture (46) est par exemple monté sur la première coucheuse (32) et/ou la deuxième coucheuse (34), qui est conçu pour fermer sélectivement l'ouverture pour distribuer le matériau de construction particulaire, et/ou dans laquelle par exemple respectivement un élément d'enduction (44), qui est conçu pour enduire le matériau de construction particulaire distribué par l'ouverture, afin de niveler et/ou de compacter ainsi le matériau particulaire distribué, est monté respectivement sur la première coucheuse (32) et/ou la deuxième coucheuse (34), et/ou
la première coucheuse (32) et la deuxième coucheuse (34) sont reliées de manière fixe l'une à l'autre, de sorte qu'elles peuvent être déplacées ensemble au-delà du premier espace de construction (B1) ou du deuxième espace de construction (B2).

9. Imprimante 3D (100) selon l'une quelconque des revendications 2 à 8, dans laquelle la tête d'impression (52) commune
a une zone de distribution d'agent de traitement formée par les buses d'impression, dont la dimension correspond à une partie, par exemple sensiblement la moitié, ou à la totalité de la longueur/dimension d'un côté court respectif, et/ou
est disposée dans le sens vertical à distance de la première coucheuse (32) et de la deuxième coucheuse (34) et peut être déplacée horizontalement dans un plan horizontal séparé.

10. Imprimante 3D (100) selon l'une quelconque des revendications 2 à 9, avec en outre une unité de chargement de coucheuse (60) commune intégrée à l'imprimante 3D (100),
qui est disposée dans le sens vertical au-dessus de la première et de la deuxième coucheuse (32, 34) et/ou
avec laquelle aussi bien la première que la deuxième coucheuse (32, 34) peut être alimentée en matériau de construction, par exemple par l'intermédiaire d'une structure d'amenée en plusieurs parties, par exemple divisée en deux parties, et/ou se ramifiant, et/ou
qui présente une unité de mélange commune, présentant par exemple un récipient de mélange commun avec un agitateur, dans laquelle le matériau de construction préparé dans le récipient de mélange peut être injecté dans la première et la deuxième coucheuse (32, 34) par l'intermédiaire d'une structure d'amenée divisée en plusieurs parties, par exemple divisée en deux parties, et/ou se ramifiant, lorsque celles-ci sont déplacées dans une position de remplissage respective.

11. Imprimante 3D (100) selon l'une quelconque des revendications précédentes, avec
une structure de cadre (70) commune, dans laquelle sont disposés à la fois le premier espace de construction (B1) et le deuxième espace de construction (B2), et/ou
un boîtier (80) commun, dans lequel sont disposés aussi bien le premier espace de construction (B1) que le deuxième espace de construction (B2).

12. Imprimante 3D (100) selon l'une quelconque des revendications précédentes, dans laquelle l'imprimante 3D présente une première et une deuxième ouverture d'insertion de boîte de construction (82, 84), qui sont par exemple prévues sur un côté commun de l'imprimante 3D (100).

13. Ensemble d'imprimante 3D (200), avec
une imprimante 3D (100) selon l'une quelconque des revendications 1 à 12, et
un système de transport sans conducteur (90) pour le chargement automatique de l'imprimante 3D (100) avec des boîtes de construction (10, 20),
dans lequel le système de transport sans conducteur (90) présente par exemple un système de rails (94), qui s'étend à l'extérieur de l'imprimante 3D (100) du côté des première et deuxième ouvertures d'insertion de boîte de construction (82, 84) de la revendication 12 et le long duquel une respective de la première et deuxième boîte de construction (10, 20) peut être déplacée.

14. Ensemble d'imprimante 3D (200) selon la revendication 13, avec
une première et une deuxième imprimantes 3D (100, 100') selon la revendication 12,
dans lequel la première et la deuxième imprimantes 3D (100, 100') sont disposées face à face de telle sorte que la première et la deuxième ouverture d'insertion de boîte de construction (82, 84) de la première imprimante 3D (100) et la première et la deuxième ouverture d'insertion de boîte de construction (82', 84') de la deuxième imprimante 3D (100') sont tournées l'une vers l'autre et le système de transport sans conducteur (90), par exemple le système de rails (94) de celui-ci, s'étend entre la première et la deuxième imprimante 3D (100, 100'), de sorte que la première et la deuxième imprimantes 3D (100, 100') peuvent être chargées avec des boîtes de construction (10, 20) respectives via le système de transport sans conducteur (90) commun, par exemple le système de rails (94) de celui-ci.

15. Procédé de fabrication générative, selon lequel, dans un premier espace de construction (B1) et un deuxième espace de construction (B2), disposé de manière adjacente au premier espace de construction (B1), d'une imprimante 3D (100) commune selon l'une quelconque des revendications 1 à 12, respectivement un ou plusieurs composants tridimensionnels, par ex. un moule ou un noyau de coulée, sont construits simultanément par couches dans une tâche de construction respective, en particulier par formation de couches superposées de matériau de construction particulaire, contenant par exemple des particules de sable, et solidification sélective d'une zone partielle de la couche de matériau de construction respective dans l'espace de construction (B1, B2) respectif, dans lequel, éventuellement :
le premier espace de construction (B1) est disposé au-dessus d'une première plate-forme de construction (14) et le deuxième espace de construction (B2) au-dessus d'une deuxième plate-forme de construction (24) et/ou
le premier espace de construction (B1) est défini par une première boîte de construction (10) et le deuxième espace de construction (B2) par une deuxième boîte de construction (20) et/ou
les deux espaces de construction (B1, B2) sont desservis par une tête d'impression (52) commune, à l'occasion de quoi la tête d'impression (52) commune parcourt par exemple le premier et le deuxième espace de construction (B1, B2) perpendiculairement aux côtés courts de celui-ci, par exemple en forme de méandres, par exemple en forme de U, et/ou
la tête d'impression (52) commune est déplacée dans un premier plan horizontal et les deux coucheuses (32, 34) dans un deuxième plan horizontal, qui est disposé à distance verticale du premier plan horizontal et se trouve par exemple en dessous de celui-ci, et/ou
la tête d'impression (52) est déplacée à une vitesse supérieure à celle de la coucheuse (32, 34) respective et/ou
le premier espace de construction (B1) et le deuxième espace de construction (B2) sont logés dans un boîtier (80) commun, et/ou
le premier espace de construction (B1) et le deuxième espace de construction (B2) sont disposés dans une structure de cadre (70) commune et/ou
la première coucheuse (32) et la deuxième coucheuse (34) sont chargées en matériau de construction par une unité de chargement de coucheuse (60) commune.
